# EUROPÄISCHE PATENTSCHRIFT

(11) **EP 1 900 084 B1**
(45) Veröffentlichungstag und Bekanntmachung des Hinweises auf die Patenterteilung: **09.02.2011**
(21) Anmeldenummer: 06776113.0
(22) Anmeldetag: 03.07.2006
(51) Int. Cl.: H02K 41/02, H02K 3/28, H02K 15/085

(54) **VORRICHTUNG UND VERFAHREN ZUM VERARBEITEN, AUFNEHMEN UND/ODER MONTIEREN EINES ELEKTRISCHEN LEITERS**
DEVICE AND METHOD FOR PROCESSING, ACCOMMODATING, AND/OR MOUNTING A CONDUCTOR
DISPOSITIF ET PROCEDE DE TRAITEMENT, DE LOGEMENT ET / OU DE MONTAGE D'UN CONDUCTEUR ELECTRIQUE

(30) Priorität: 06.07.2005 DE 102005031844; 03.02.2006 DE 102006005406; 20.06.2006 DE 102006028354
(43) Veröffentlichungstag der Anmeldung: 19.03.2008
(73) Patentinhaber: Draka Industrial Cable GmbH, 42369 Wuppertal (DE)
(72) Erfinder: FUNKEN, Peter, 42369 Wuppertal (DE); ROSIN, Christian, 86934 Reichling (DE)
(74) Vertreter: Gerbaulet, Hannes
(86) Internationale Anmeldenummer: PCT/EP2006/006448
(87) Internationale Veröffentlichungsnummer: WO 2007/003393

(56) Entgegenhaltungen:
- DE-A1- 2 827 150
- DE-A1- 10 011 118
- DE-A1- 10 346 105
- DE-A1- 19 833 418
- US-A1- 2003 029 025

## Beschreibung

### Technisches Gebiet

Die vorliegende Erfindung betrifft allgemein das technische Gebiet der Herstellung und/oder der Montage von elektrischen Leitern, insbesondere von Industriekabeln.

Im Spezielleren betrifft die vorliegende Erfindung eine Montagevorrichtung sowie ein Verfahren zum Verarbeiten mindestens eines für mindestens einen Linearmotor vorgesehenen, mindestens eine elektrische Leitung aufweisenden elektrischen Leiters, insbesondere mindestens eines Wanderfeldleiters, zum Beispiel mindestens eines Wicklungsstrangs.

Beispielsweise betrifft die vorliegende Erfindung die Herstellung und Verlegung des Wicklungsstrangs eines Linearmotors.

### Stand der Technik

Ein Linearmotor oder Wandermotor ist ein elektrischer Antriebsmotor, der beispielsweise als berührungsfreier Antrieb einer Magnetschwebebahn eingesetzt wird.

Bei einer derartigen Magnetschwebebahn sind die Wicklungsstränge oder Kabelwicklungen des Linearmotors im Fahrweg installiert. Wird in die Wicklungsstränge Strom eingespeist, so entsteht ein magnetisches Wanderfeld, von dem das Fahrzeug berührungsfrei mitgezogen wird.

Elektrische Leitungen für die Wechselstromwicklung eines Linearmotors sind beispielsweise aus der Druckschrift DE 196 38 603 A1 oder aus der Druckschrift DE 196 44 870 A1 bekannt.

Eine Vorrichtung zum Verbinden des elektrisch leitfähigen Mantels einer in die Nuten des Induktors eines Linearmotors eingelegten elektrischen Leitung mit einem Erdleiter ist in der Druckschrift WO 97/16881 A1 offenbart.

Ferner sind mehrere Systeme für die Herstellung und Verlegung der Wicklungsstränge eines Linearmotors bekannt. So existieren bereits Verfahren und Vorrichtungen
- für die Montage von vorgefertigten dreiphasigen Wicklungen direkt auf der Baustelle sowie
- für die Herstellung und Montage von einphasigen Wicklungen direkt auf der Baustelle.

Bei den bekannten Systemen ist in der Regel zumindest ein Teil der Aktivitäten unter Baustellenbedingungen durchzuführen. Folglich sind die bekannten Systeme für die Herstellung und Verlegung der Kabelwicklungen von Linearmotoren mit allen qualitativen Nachteilen eines Baustellenprozesses behaftet.

Ein Verfahren zur Herstellung einer dreiphasigen Wechselstromwicklung für einen Linearmotor, bei dem die Wicklungsstränge weitestgehend werkseitig herstellbar sind, ist aus der Druckschrift EP 1 542 341 A1 bekannt.

Bei diesem bekannten Verfahren erfolgt jedoch nur die Wicklung, nicht aber die Verlegung der Wicklungsstränge werkseitig; vielmehr werden die Wicklungsstränge direkt auf der Baustelle bzw. am Montageort der Fahrstrecke in den Stator eingebracht.

*In der Druckschrift* DE 198 33 418 A1 *sind Konstruktionsmerkmale und ein Herstellungsverfahren für die dreiphasige Wechselstrom wicklung des Linearmotors einer Magnetbahn sowie Vorrichtungen zur Durchführung eines derartigen Herstellungsverfahrens offenbart.*

Ferner ist aus der Druckschrift DE 103 46 105 A1 ein Verfahren zum Aufbau einer Fahrstrecke für ein durch einen elektrischen Linearmotor antreibbares Magnetschwebefahrzeug bekannt.

Bei diesem bekannten Verfahren werden Einheiten, die jeweils aus Teilstücken des Trägers mit daran angebrachtem Stator einschließlich zugehöriger Wicklungsstränge bestehen, werkseitig vorgefertigt und am Montageort mittels Steckverbindungen zur Fahrstrecke zusammengesetzt.

Ferner ist die Vorfertigung bzw. die Ausrüstung von Fahrwegträgern mit nach Art einer Langstatorwicklung (= long stator winding = LSW) geformten elektrischen Leitern unter Werkstattbedingungen bekannt.

Die bekannten Systeme können jedoch die spezifizierten Systemanforderungen eines Linearmotorantriebs nicht vollständig erfüllen; insbesondere können durch unterschiedliche Abstände der Wickelköpfe gegenüber dem Stator bei herkömmlichen Systemen Asymmetrien des dreiphasigen Systems verursacht werden.

Da aufgrund der räumlichen Ausbildung der in den Nuten des Stators angeordneten Erregerwicklung die Entfernung der einzelnen Phasen zum Statorkern unterschiedlich ausfällt, ergeben sich Asymmetrien.

Aufgrund der physikalischen Notwendigkeit, dass die Wicklungen jeder Phase aneinander vorbei geführt werden, liegen die einzelnen Wicklungsstränge in unterschiedlichen räumlichen Lagen zueinander.

Durch die lokalen Asymmetrien im dreiphasigen Synchronmotor bei systembedingter unterschiedlicher räumlicher Verlegung werden unterschiedliche Stromfelder und Spannungsunterschiede in den einzelnen Phasen des Linearmotors erzeugt; diese ungleichmäßigen Stromfelder und Spannungen erzeugen Verluste im Antriebssystem.

Die bekannten Verfahren zur Herstellung von dreiphasigen Wicklungen für einen Linearmotor bieten also keine wirtschaftliche Lösung zum Ausgleich der ungleichmäßigen Feldausbildung der drei einzelnen Phasen.

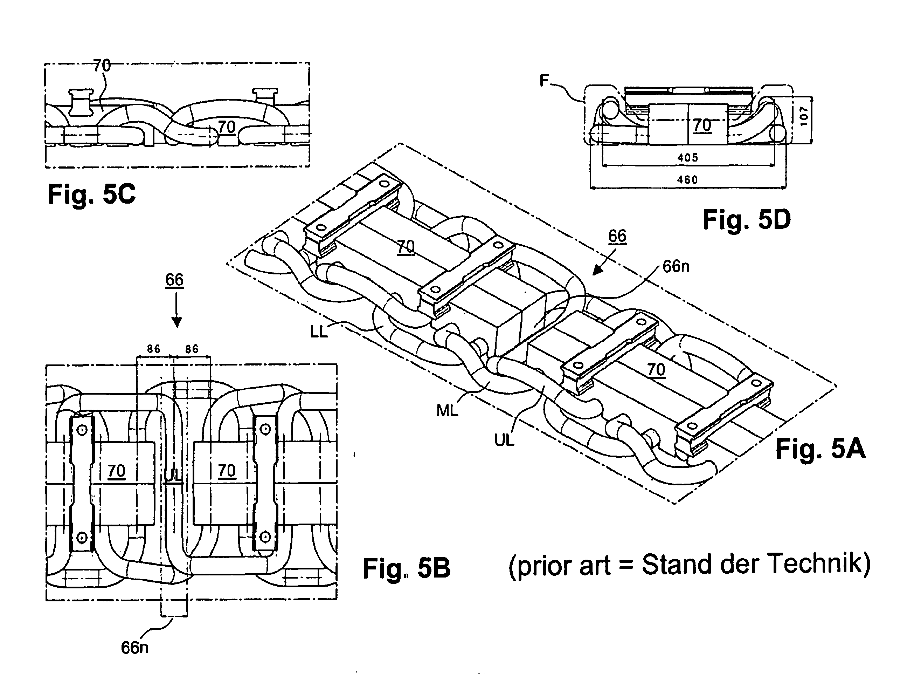

Ein weiterer Nachteil bei der kontinuierlich verlegten dreiphasigen Wicklung gemäß dem Stand der Technik ist die physikalische Notwendigkeit, über die Trägerübergänge 66 hinaus einen Dehnspalt 66n vorzusehen (vgl. Fig. 5A und Fig. 5B).

Dies bedeutet eine Diskontinuität des Langstators, die sich aus dem Wegfall eines Statorzahns jeweils am Trägerübergang 66 ergibt. Aus Kontinuitätsgründen kann eine mit den bekannten Methoden hergestellte Wicklung des elektrischen Leiters nicht unterbrochen werden; deshalb wird der elektrische Leiter gemäß dem Stand der Technik durch diesen Spalt 66n im freien Raum verlegt.

Es sind lediglich umfangreiche planerische Schritte oder Diskontinuitätsmethoden bekannt, mittels derer verhindert werden kann, dass ein unterer Wicklungsstrang oder eine untere Lage UL der Motorwicklung 40 in der freien Nut 66n liegt.

In der Praxis wird diese Diskontinuität jedoch trotz entsprechender Berechnungen nicht immer umgesetzt; deshalb werden die Endstatorpakete der benachbarten Träger 60 in der Regel nachträglich gegeneinander ausgetauscht.

Der mittlere Wicklungsstrang bzw. die mittlere Lage ML sowie der obere Wicklungsstrang bzw. die obere Lage UL der dreiphasigen Wicklung wird bzw. werden gemäß dem Stand der Technik immer durch den Dehnspalt 66n im freien Raum verlegt; deshalb können diese beiden Lagen ML, UL, insbesondere die mittlere Lage ML, nicht dauerhaft lagestabil verlegt werden.

Vielmehr muss gemäß dem Stand der Technik zumindest der mittlere Wicklungsstrang bzw. die mittlere Lage ML mit entsprechendem zusätzlichem Aufwand mittels Kabelbinder zusätzlich befestigt werden. Mittels des Kabelbinders kann jedoch keine dauerhafte Verbindung erreicht werden, so dass eine aufwändige Instandhaltung notwendig ist.

Ferner sind die Material- und Energiekosten bei der Herstellung und Montage der Wicklungsstränge bei bekannten Systemen hoch.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Montagevorrichtung der eingangs genannten Art sowie ein Verfahren der eingangs genannten Art so weiterzuentwickeln,
- *dass die Wicklungsstränge nicht direkt auf der Baustelle in den Stator eingebracht werden können* und
- *dass Asymmetrien des Dreiphasensystems vermieden werden können.*

Diese Aufgabe wird durch eine *Montagevorrichtung* mit den im Anspruch 1 angegebenen Merkmalen sowie durch ein Verfahren mit den im Anspruch 8 angegebenen Merkmalen gelöst. Vorteilhafte Ausgestaltungen und zweckmäßige Weiterbildungen der vorliegenden Erfindung sind in den jeweiligen Unteransprüchen gekennzeichnet.

Die vorliegende Erfindung basiert grundsätzlich darauf, dass der elektrische Leiter von mindestens einer Verarbeitungseinrichtung
- geregelt zur Verfügung gestellt wird, insbesondere aus mindestens einem Vorrat entnommen wird, beispielsweise von mindestens einer Trommel abgezogen wird, und/oder
- kontrolliert geformt, insbesondere als mindestens eine L[ang]S[tator]W[icklung] ausgerichtet und/oder gebogen und/oder gekröpft und/oder gewickelt, wird.

Gemäß einer vorteilhaften Ausführungsform der vorliegenden Erfindung ist die Verarbeitungseinrichtung dazu ausgebildet, das Zurverfügungstellen des ungeformten elektrischen Leiters mittels mindestens eines Kontrollsystems, insbesondere mittels mindestens eines computergestützten integrierten Managementsystems (IMS), zu regulieren. Die Verarbeitungseinrichtung ist also vorzugsweise automatisch in der Lage die geforderte Menge ungebogenen elektrischen Leiters vor und/oder während und/oder nach dem Formungsprozess zu liefern.

Des Weiteren formt die Verarbeitungseinrichtung optionalerweise den elektrischen Leiter gemäß den Vorgaben des Kontrollsystems, insbesondere in einem Biege- und/oder Kröpfprozess. Das Kontrollsystem kann zu diesem Zweck zum Erfassen und/oder zum Ermitteln von für das Verarbeiten des elektrischen Leiters relevanten Daten und/oder Informationen ausgelegt sein.

Auf diese Weise kann die Verarbeitungseinrichtung die Formung des vorzugsweise mäanderförmig gewickelten elektrischen Leiters, insbesondere die Anzahl der zu formenden Mäander, regulieren; insbesondere ist die Verarbeitungseinrichtung in der Lage, vorzugsweise automatisch die geforderte Anzahl der Mäander zu liefern.

Die Verarbeitungseinrichtung kann beispielsweise als einphasige und/oder dreiphasige Anlage, etwa zum einphasigen und/oder zum dreiphasigen Wickeln des elektrischen Leiters, ausgelegt sein.

Beim dreiphasigen Wickeln wird beispielsweise
- mindestens eine erste Phase, etwa mindestens eine untere Lage,
- mindestens eine zweite Phase, etwa mindestens eine mittlere Lage, und
- mindestens eine dritte Phase, etwa mindestens eine obere Lage, geformt; insbesondere ist die Verarbeitungseinrichtung dazu ausgebildet, den elektrischen Leiter nach Art einer L[ang]S[tator]W[icklung] zu formen.

Ferner ist die Verarbeitungseinrichtung vorteilhafterweise dazu ausgebildet, den elektrische Leiter nach Abschluss des Formungsprozesses abschnittsweise zu unterteilen, insbesondere in Abschnitten vorgegebener Länge vom Vorrat abzutrennen, beispielsweise abzuschneiden.

Hierdurch wird eine Einzelträgerverlegung des elektrischen Leiters und somit eine stabile Verlegung des elektrischen Leiters am Trägerübergang ermöglicht. Im Gegensatz zum Stand der Technik ist es also nicht erforderlich, den elektrischen Leiter im freien Raum durch einen Dehnspalt zu verlegen.

Bei einer zweckmäßigen Ausgestaltungsform der vorliegenden Erfindung ist die Verarbeitungseinrichtung durch mindestens eine Fläche, insbesondere durch ein Dach, vor externen Einflüssen, insbesondere vor Witterungseinflüssen, geschützt.

Dabei kann sich die Verarbeitungseinrichtung in einer Halle, zum Beispiel in einer Trägerausrüstungshalle, befinden. Dies bietet den Vorteil, dass die Ausrüstung des Trägers mit dem elektrischen Leiter, insbesondere die Herstellung und Verlegung des elektrischen Leiters, nicht durch Baustellenprozesse beeinträchtigt wird.

Vorteilhafterweise ist die Verarbeitungseinrichtung in Querrichtung zur Achse mindestens eines mit dem elektrischen Leiter auszurüstenden Trägers, insbesondere mindestens eines Stators des Linearmotors, zum Beispiel mindestens eines vorwiegend Stahl und/oder Beton aufweisenden Fahrbahnträgers oder Fahrwegträgers einer Magnetschwebebahn, bewegbar, insbesondere verfahrbar. Hierdurch wird das kontrollierte Formen des elektrischen Leiters erleichtert.

Gemäß einer bevorzugten Ausbildungsform der vorliegenden Erfindung ist die Verarbeitungseinrichtung dazu ausgelegt, die Formung des elektrischen Leiters unabhängig von der räumlichen Orientierung der Verarbeitungseinrichtung durchzuführen.

Vorzugsweise kann die (einphasige und/oder dreiphasige) Wicklung des elektrischen Leiters beispielsweise in Gebrauchslage und/oder in Überkopflage und/oder in Seitenlage hergestellt und/oder übergeben werden, was insbesondere dadurch ermöglicht wird, dass die Verarbeitungseinrichtung aufgrund ihrer Installation und Ausgestaltung in einer Halle nicht fahrweggebunden ist.

Beispielsweise kann im Falle eines Konzeptes mit Fertigung von Einzelphasen auf Vorrat die Aufnahmeeinrichtung um neunzig Grad schwenkbar gestaltet werden, um Platz für mehrere Einzelphasen zu schaffen, bevor diese Einzelphasen in der Gebrauchs- oder Überkopflage eingedrückt werden.

Unabhängig hiervon oder in Verbindung hiermit kann bei einer vorteilhaften Ausgestaltungsform der vorliegenden Erfindung die Form des geformten elektrischen Leiters mittels mindestens eines Stabilisierungsmittels stabilisiert werden.

Beispielsweise kann während oder nach Abschluss des Formungsprozesses, insbesondere während oder nach Abschluss der Wicklungsfertigung, von der Verarbeitungseinrichtung das Stabilisierungsmittel als Hilfsmittel zur Verbesserung der Formstabilität des vorzugsweise mäanderförmig gewickelten elektrischen Leiters verwendet werden.

*Bestandteil der* vorliegenden Erfindung *ist* des Weiteren mindestens eine Aufnahmeeinrichtung zum Aufnehmen, insbesondere mindestens eine Fördereinrichtung zum Befördern, des durch *die* Verarbeitungseinrichtung zur Verfügung gestellten und/oder geformten elektrischen Leiters.

Die Aufnahmeeinrichtung steht zweckmäßigerweise mit der Verarbeitungseinrichtung in Verbindung, insbesondere kann die Aufnahmeeinrichtung mit der Verarbeitungseinrichtung verkettet werden.

Vorteilhafterweise ist die Verarbeitungseinrichtung dazu ausgebildet den elektrischen Leiter, insbesondere nach Abschluss des Formungsprozesses, an die Aufnahmeeinrichtung zu übergeben. Hierbei ist die Aufnahmeeinrichtung vorzugsweise dazu ausgelegt, den elektrischen Leiter unabhängig von der räumlichen Orientierung der Aufnahmeeinrichtung aufzunehmen.

Beispielsweise kann die Aufnahmeeinrichtung den elektrischen Leiter, insbesondere die Wicklung, in Gebrauchslage und/oder in Überkopflage und/oder in Seitenlage aufnehmen. Der durch die Aufnahmeeinrichtung ermöglichte Transport des, insbesondere geformten, elektrischen Leiters erfolgt zweckdienlicherweise nach Abschluss des Formungsprozesses, insbesondere nach Abschluss der Wicklungsfertigung.

Unabhängig hiervon oder in Verbindung hiermit ist die Aufnahmeeinrichtung vorteilhafterweise dazu ausgelegt, sich um ihre eigene Achse zu drehen, um so beispielsweise eine gewünschte Stellung für die Anbringung, insbesondere für die Montage, des elektrischen Leiters einzunehmen.

Bei einer zweckmäßigen Ausgestaltungsform der vorliegenden Erfindung ist die Aufnahmeeinrichtung durch mindestens eine Fläche, insbesondere durch ein Dach, vor externen Einflüssen, insbesondere vor Witterungseinflüssen, geschützt.

Dabei kann sich die Aufnahmeeinrichtung in einer Halle, zum Beispiel in der Trägerausrüstungshalle, befinden. Dies bietet den Vorteil, dass die Ausrüstung des Trägers mit dem elektrischen Leiter, insbesondere die Herstellung und Verlegung des elektrischen Leiters, nicht durch Baustellenprozesse beeinträchtigt wird.

Die Aufnahmeeinrichtung kann beispielsweise auf dem Boden, insbesondere auf dem Hallenboden, angeordnet sein.

Des Weiteren kann die Aufnahmeeinrichtung an dem auszurüstenden Träger angeordnet sein, beispielsweise kann sich die Aufnahmeeinrichtung auf den auszurüstenden Träger stützen.

Ferner kann die Aufnahmeeinrichtung aber auch an der sie vor externen Einflüssen schützenden Fläche angeordnet sein, insbesondere kann die Aufnahmeeinrichtung an der Hallenkonstruktion hängen.

Vorteilhafterweise ist die Aufnahmeeinrichtung in Längsrichtung zur Achse des auszurüstenden Trägers bewegbar, insbesondere verfahrbar. Hierdurch kann der geformte elektrische Leiter zum Träger transportiert werden. Dabei kann die Aufnahmeeinrichtung beispielsweise als Förderband, als Zugeinrichtung, als Kette oder anderweitig ausgebildet sein.

Die Aufnahmeeinrichtung kann aus einem Stück oder modular aufgebaut sein. Des Weiteren kann die Aufnahmeeinrichtung mindestens einen eigenen-Antrieb aufweisen und beispielsweise dazu ausgelegt sein, den Vortrieb zu sichern.

*Bestandteil der* vorliegenden Erfindung *ist ferner* mindestens eine Ausrüstungseinrichtung, insbesondere mindestens eine Verlegeeinheit, beispielsweise mindestens eine Eindruckeinrichtung, zur Anbringung des elektrischen Leiters, insbesondere nach Abschluss des Formungsprozesses, an und/oder in den Träger.

Die Ausrüstungseinrichtung steht zweckmäßigerweise mit der Aufnahmeeinrichtung in Verbindung, insbesondere kann die Ausrüstungseinrichtung mit der Aufnahmeeinrichtung verkettet werden. Vorteilhafterweise ist die Aufnahmeeinrichtung dazu ausgebildet, den elektrischen Leiter, insbesondere an der gewünschten Montagestelle, an die Ausrüstungseinrichtung zu übergeben.

Unabhängig hiervon oder in Verbindung hiermit kann die Ausrüstungseinrichtung dazu ausgebildet sein, den elektrischen Leiter nach Abschluss des Anbringens des elektrischen Leiters an den Träger und/oder im Träger abschnittsweise zu unterteilen, insbesondere in Abschnitten vorgegebener Länge vom Vorrat abzutrennen, beispielsweise abzuschneiden.

Vorteilhafterweise ist die Ausrüstungseinrichtung zum Verschalten, insbesondere zum Verbinden oder zum Verketten, beispielsweise zum Vermuffen, der jeweiligen Phasen der Abschnitte des elektrischen Leiters ausgebildet.

Hierbei können zweckmäßigerweise mindestens zwei der jeweiligen Phasen der Abschnitte des elektrischen Leiters alternierend oder vertauscht, insbesondere über Kreuz, verschaltet werden, so dass der zusammengesetzte elektrische Leiter die drei Phasen (= L[ower]L[ayer], M[iddle]L[ayer], U[pper]L[ayer]) in gleichen Anteilen aufweist; insbesondere wird die Langstatorwicklung vorzugsweise
- zu etwa einem Drittel in Art der ersten Phase (L[ower]L[ayer]),
- zu etwa einem Drittel in Art der zweiten Phase (M[iddle]L[ayer]) und
- zu etwa einem Drittel in Art der dritten Phase (U[pper]L[ayer]) gewickelt.

Eine Ausführungsform der vorliegenden Erfindung löst das vorstehend beschriebene Problem der ungleichmäßigen Feldausbildung der drei einzelnen Phasen durch die vorteilhafte Option eines planmäßigen beliebigen Lagentauschs der Phasen. Dies kann bei dieser vorteilhaften Ausführungsform ohne jeglichen zusätzlichen Aufwand erreicht werden.

Durch diese vorteilhafte Option eines planmäßigen beliebigen Lagentauschs der Phasen können alle Phasen im Verlauf eines Abschnitts des Linearmotors zu je einem Drittel der Linearmotorabschnittslänge in der unteren Lage, in der mittleren Lage und in der oberen Lage verlegt und somit die Asymmetrien der dreiphasigen Wicklung ausgeglichen werden.

Die Auflösung der Kontinuitätsbedingung der Wicklungsphasen erlaubt also an planmäßiger Stelle die Realisierung des Phasentausches und somit den Ausgleich von Asymmetrien.

Zur Vermeidung von
- durch leichte Ungenauigkeiten in der Verlegung und/oder
- durch Formhaltigkeit des dreiphasigen elektrischen Leiters
bedingten Spannungsunterschieden kann mindestens ein isolierendes Material, beispielsweise mindestens ein isolierendes Klebestück, an die Kontaktstellen der jeweiligen Phasen des elektrischen Leiters appliziert werden.

Die Applikation des isolierenden Materials, insbesondere des isolierenden Klebestücks, erfolgt vorteilhafterweise automatisch mittels des Kontrollsystems.

Ferner kann das isolierende Material, insbesondere das isolierende Klebestück, auch als Stabilisierungsmittel dienen, also eine stabilisierende Funktion für mehrere Anwendungsfälle übernehmen. Dies ermöglicht beispielsweise die Realisierung einer vorgefertigten formstabilen dreiphasigen L[ang]S[tator]W[icklung], die in einem Arbeitsgang in Statorpakete des Trägers eingelegt werden kann.

Als Vorteile ergeben sich hieraus kürzere Verlegezeiten, kompaktere Lagermöglichkeiten, beispielsweise die Lagerung einer dreiphasigen LSW anstelle dreier getrennter LSW, sowie eine erleichterte Logistik.

Ferner kann die Stabilität der Wickelköpfe im eingelegten Zustand während des Betriebs erhöht und somit die Gefahr verringert werden, dass über die Zeit die Formstabilität der einzelnen Wickelköpfe zu einer Freiraumverletzung führt.

Bei einer zweckmäßigen Ausgestaltungsform der vorliegenden Erfindung kann der Träger mit einfach geformtem elektrischem Leiter und/oder mit mehrfach geformtem elektrischem Leiter ausgerüstet werden. Vorzugsweise ist die Ausrüstungseinrichtung dazu ausgelegt, sowohl Einzelmäander als auch mehrere Mäander gleichzeitig in den Träger einzudrucken.

Durch die räumliche Ausgestaltungsmöglichkeit, beispielsweise in einer Halle, ist es also bei einer vorteilhaften Ausgestaltungsform der vorliegenden Erfindung möglich, mehrere Statorpakete in einem Prozessschritt zu belegen. Die Vorgehensweise gemäß dem Stand der Technik ist hingegen auf die Ausrüstung eines Statorpakets limitiert.

Optionalerweise kann die Ausrüstungseinrichtung gemäß der vorliegenden Erfindung mindestens einen Antrieb aufweisen und beispielsweise dazu ausgelegt sein, den Vortrieb zu sichern. Diese vorteilhafte Ausgestaltungsform der vorliegenden Erfindung wird
- durch zur Verfügung stehende ausreichende Räumlichkeiten, beispielsweise in einer Halle, und/oder
- durch zur Verfügung stehenden Medien, beispielsweise durch das Kontrollsystem,
ermöglicht.

Das Ausrüsten des Trägers, insbesondere der Eindrückprozess, kann beispielsweise mittels mindestens einer mechanischen Vorrichtung, etwa mittels mindestens eines Gummirads und/oder mittels mindestens eines pneumatischen oder hydraulischen Zylinders, in jeweils optimaler Weise ausgeführt werden.

Vorteilhafterweise ist die Ausrüstungseinrichtung durch mindestens eine Fläche, insbesondere durch ein Dach, vor externen Einflüssen, insbesondere vor Witterungseinflüssen, geschützt.

Dabei kann sich die Ausrüstungseinrichtung in einer Halle, zum Beispiel in der Trägerausrüstungshalle, befinden. Dies bietet den Vorteil, dass die Ausrüstung des Trägers mit dem elektrischen Leiter, insbesondere die Verlegung des elektrischen Leiters, nicht durch Baustellenprozesse beeinträchtigt wird.

Die Ausrüstungseinrichtung kann beispielsweise auf dem Boden, insbesondere auf dem Hallenboden, angeordnet sein. Des Weiteren kann die Ausrüstungseinrichtung an dem auszurüstenden Träger angeordnet sein, beispielsweise kann sich die Ausrüstungseinrichtung auf den auszurüstenden Träger stützen.

Durch die stationäre Ausrüstung des Trägers in der Halle kann der Träger in der jeweils vorteilhafteren Gebrauchslage oder Überkopflage ausgerüstet werden.

Ferner kann die Aufnahmeeinrichtung die Mäander durch die räumlichen Ausgestaltungsmöglichkeiten in einer Halle konzeptabhängig in Gebrauchslage und/oder in Überkopflage übernehmen und in Kombination mit der Ausrüstungseinrichtung im Träger verlegen.

Durch die räumlichen Ausgestaltungsmöglichkeiten in einer Halle und durch die uneingeschränkte Wahl von Antriebsmedien, wie etwa Hydraulikaggregate, Pressluft und/oder Strom, kann sich also die Orientierung der Ausrüstungseinrichtung am auszurüstenden Träger orientieren, und gleichzeitig kann die Ausrüstungseinrichtung unabhängig von der Lage des Trägers an Aufhängungen bzw. auf Fahrgestellen verfahren werden.

Gemäß einer bevorzugten Ausbildungsform der vorliegenden Erfindung ist die Ausrüstungseinrichtung somit dazu ausgelegt, das ausrüsten des Trägers mit dem elektrischen Leiter unabhängig von der räumlichen Orientierung der Ausrüstungseinrichtung durchzuführen. Vorzugsweise kann die Ausrüstungseinrichtung beispielsweise in Gebrauchslage und/oder in Überkopflage und/oder in Seitenlage arbeiten.

Gemäß der vorliegenden Erfindung weist die Vorrichtung mehrere Funktionsteile auf, nämlich mindestens eine Verarbeitungseinrichtung gemäß der vorstehend dargelegten Art, mindestens eine Aufnahmeeinrichtung gemäß der vorstehend dargelegten Art und mindestens eine Ausrüstungseinrichtung gemäß der vorstehend dargelegten Art.

Die Verarbeitungseinrichtung, die Aufnahmeeinrichtung, die Ausrüstungseinrichtung, die Vorrichtung sowie das Verfahren gemäß der vorliegenden Erfindung bieten den Vorteil, dass alle Anforderungen zur Ausgestaltung eines Linearmotorantriebs, insbesondere eines dreiphasigen und/oder synchronen Linearmotors, flexibel erfüllt werden können. Hierbei ist ein besonderer Vorteil, dass Asymmetrien eines dreiphasigen synchronen Linearmotors ausgeglichen werden können.

Insbesondere werden gemäß der vorliegenden Erfindung die System-Anforderungen erfüllt, die von den Verfahren und Vorrichtungen gemäß dem Stand der Technik, nicht erfüllt werden.

So können gemäß einer vorteilhaften Ausführung der vorliegenden Erfindung, beispielsweise durch unterschiedliche Abstände der Wickelköpfe gegenüber dem Stator verursachte Asymmetrien eines dreiphasigen Systems ausgeglichen werden.

Die vorliegende Erfindung bietet des Weiteren den Vorteil, dass optionalerweise eine datenverarbeitungstechnisch gesteuerte, insbesondere automatisierte, Verarbeitung und/oder Aufnahme und/oder Ausrüstung, insbesondere Herstellung und Montage, des elektrischen Leiters, insbesondere der Wicklungsstränge, zum Beispiel
- im Falle der reduzierten Antriebsleistung auf Beharrungsstreckenabschnitten zur Verringerung der Material und Energiekosten und/oder
- im Falle der reduzierten Antriebsleistung und Kurzschlusswicklung im

Bereich von Stationen, etwa von Bahnhöfen, der Magnetschwebebahn, realisiert werden kann.

Zur Bereitstellung einer verminderten Antriebsleistung des Linearmotors kann gemäß einer vorteilhaften Ausführungsform der Verarbeitungseinrichtung der vorliegenden Erfindung sowie gemäß einer vorteilhaften Ausführungsform des Verfahrens der vorliegenden Erfindung der elektrische Leiter bereichsweise, insbesondere auf entsprechend anteiliger Länge, ungeformt, beispielsweise ungewickelt, zur Verfügung gestellt werden.

Eine automatisierte Herstellung von Sonderantriebsbereichen ist zum Beispiel im Bereich von Bahnhöfen oder von Stationen der Magnetschwebebahn wünschenswert. Aus sicherheitstechnischen Gründen werden in den Bahnhöfen oder Stationen Antriebsabschnitte mit reduzierter Leistung, wie zum Beispiel mit etwa 33 Prozent Leistung oder mit etwa fünfzig Prozent Leistung, installiert.

Gemäß dem Stand der Technik können die Antriebsabschnitte von Sonderbereichen, wie etwa von Bahnhöfen, nur manuell verlegt bzw. bestückt werden. Hierbei existieren zwei Lichtraumprofile für die Freiräume des Transrapid-Fahrzeugs, nämlich
- ein dynamisches Lichtraumprofil für Fahrten mit höheren Geschwindigkeiten und im Freien sowie
- ein statisches Lichtraumprofil für Fahrten mit niedriger Geschwindigkeit, etwa für Fahrten im Bahnhof oder bei der Instandhaltung.

Die bekannten Verlegeeinrichtungen sind verfahrensbedingt für das dynamische Lichtraumprofil ausgelegt und somit räumlich nicht in der Lage, mit Bahnsteigen ausgestattete Bahnhöfe zu durchfahren. Dementsprechend werden gemäß dem Stand der Technik diese Bereiche manuell verlegt.

Eine Verlegetechnik mit Automaten für Sonderbereiche mit reduziertem Antrieb, bei der die Maschine in der Lage ist, Teilabschnitte einer Motorwicklung zu verlegen, ist zwar bereits bekannt, verfahrensbedingt muss jedoch bei dieser bekannten Verlegetechnik nach dem Eindrücken des letzten Mäanders die Leitung abgefädelt und getrennt werden.

Folglich ist ein Einfädeln der Leitung vor dem Start, etwa bei Beginn eines neuen Abschnitts, notwendig. Diese durch Abfädeln und Einfädeln bedingten Nebenzeiten stehen in einem besonders schlechten Verhältnis zu den eigentlichen Verlegezeiten. In der Praxis ist somit eine manuelle Verlegung die wirtschaftliche Alternative beim bisherigen Verfahren.

Die Vorrichtung gemäß der vorliegenden Erfindung sowie das erfindungsgemäße Verfahren hingegen erlauben vorteilhafterweise die Montage mindestens eines automatisiert ausgerüsteten Trägers in Bahnhöfen und sonstigen Gebäuden.

Es kann also mindestens ein Träger, insbesondere jeder der Träger, individuell je nach Anforderung automatisch bestückt werden. Anschließend wird der elektrische Leiter, insbesondere werden die Phasenenden des elektrischen Leiters, zweckmäßigerweise planmäßig angeschlossen.

Am Beispiel eines 24 Meter langen Trägers mit fünfzig Prozent Antrieb werden gemäß dem Stand der Technik für den ersten sechs Meter langen Abschnitt und für den dritten sechs Meter langen Abschnitt des Trägers jeweils sechs Meter-Phasen, insbesondere auf einer Anlage, hergestellt, zum Einbauort transportiert, mit einer halbautomatischen Eindrückvorrichtung in die Statornuten eingedrückt und die Enden mit Überlänge am Träger fixiert.

Des Weiteren werden gemäß dem Stand der Technik in einem nachfolgenden Arbeitsgang die einzelnen Phasen innerhalb des Trägers von Installationstrupps mit insgesamt zwölf Muffen und Anschlussleitungen angeschlossen.

Gemäß einer vorteilhaften Ausführungsform der vorliegenden Erfindung wird hingegen die vorstehend beschriebene Konfiguration, also sechs Meter Mäander, sechs Meter gestreckt, sechs Meter Mäander, sechs Meter gestreckt, über die gesamte Trägerlänge automatisiert hergestellt und verlegt.

Die Fertigung der Wicklung für den Teilantrieb erfolgt vorteilhafterweise kontinuierlich ohne das beim Stand der Technik notwendige Abtrennen und Abfädeln der Leitung.

Beim Ausrüsten des Trägers mit vorkonfektionierter Leitung werden gemäß einer besonders vorteilhaften Ausführungsform der vorliegenden Erfindung die gestreckten Abschnitte, insbesondere halbautomatisch, mittels mindestens eines, beispielsweise vorher angebrachten, Befestigungsmittels, wie etwa mittels mindestens einer Klippschelle, am Träger angeordnet und/oder mit dem Träger verbunden.

Dies bietet den Vorteil, dass der elektrische Leiter im Gegensatz zum Stand der Technik nicht mit Überlänge am Träger fixiert werden muss; lediglich die gestreckten Abschnitte sind vorteilhafterweise an vorbereiteten Schellen an den Trägerwangen befestigt.

Dieses Prinzip kann für die Erzielung eines weiteren Vorteils angewandt werden, nämlich zur Einsparung von Material und von Montageaufwand auf Streckenabschnitten mit planmäßig geringer erforderlicher Antriebsleistung, zum Beispiel auf Beharrungsstrecken. Hierbei ist der Prozentsatz der Antriebsleistung vorzugsweise individuell gestaltbar.

Um beispielsweise einen kontinuierlichen Antrieb mit fünfzig Prozent Leistung zu gewährleisten, wird zweckmäßigerweise auf der gegenüberliegenden Seite des, insbesondere am Fahrweg angeordneten, Linearmotorantriebs die Belegungssequenz versetzt. Mit dieser Vorgehensweise kann die Systemanforderung des insbesondere redundanten Antriebs auch unter den Bedingungen eines Teilantriebs eingehalten werden.

Für einen eingleisigen Streckenabschnitt mit fünfzig Prozent Antriebsleistung von zum Beispiel 1,2 Kilometern Länge ergibt sich beispielsweise eine Materialeinsparung insbesondere des elektrischen Leiters, etwa der Wanderfeldleitung, von bis zu sechzig Prozent.

Unabhängig hiervon oder in Verbindung hiermit bietet die vorliegende Erfindung den Vorteil, dass der elektrische Leiter nach unterschiedlichen Formungstypen verformbar ist, so dass die Eigenschaften des Linearmotors individuell gewählt werden können.

Beispielsweise können bei einer bevorzugten Ausführungsform der vorliegenden Erfindung mindestens zwei Formungstypen, insbesondere beide Wicklungstypen A und B, entsprechend den Anforderungen eines an der linken bzw. an der rechten Seite des Fahrwegs angeordneten Linearmotorantriebs realisiert werden.

Besonders zweckmäßigerweise wird der Träger mittels mindestens zweier Verarbeitungseinrichtungen ausgerüstet, wobei
- mindestens eine der Verarbeitungseinrichtungen zum Formen des elektrischen Leiters nach dem ersten Formungstyp, insbesondere nach dem Wicklungstyp A, und
- mindestens eine weitere der Verarbeitungseinrichtungen zum Formen des elektrischen Leiters nach dem zweiten Formungstyp, insbesondere nach dem Wicklungstyp B,
ausgebildet ist.

Ein besonders zweckmäßiges Ausführungsbeispiel der vorliegenden Erfindung bietet den Vorteil, dass die Prozessparameter bei der Herstellung und Montage der Wicklungsstränge eines Linearmotors konstant gehalten werden können, wodurch die Belange einer Serienfertigung in hoher und gleichbleibender Qualität nach Industrie-Standard erfüllt werden können.

Um die Prozessparameter bei der Herstellung und/oder Verlegung der Wicklungsstränge des Linearmotors konstant zu halten, werden vorteilhafterweise für die Herstellung und/oder Verlegung der Wicklungsstränge bedeutende Daten, insbesondere mittels der Kontrolleinheit (IMS), elektronisch übertragen.

Derartige Daten sind beispielsweise die Trägerbelegung mit Statorpaketen und Statorbelegung des Antriebs, aufgelöst für jeden Träger als Fertigungsparameter für die Vorrichtung, insbesondere für mindestens eine Biege-, Kröpf- und Verlegeeinheit (BKV). In diesem Zusammenhang wird als Statorbelegung die Belegung des Trägers, insbesondere einzelner Nuten des Trägers, mit entsprechenden Wicklungsphasen bezeichnet.

Gemäß dieser vorteilhaften Ausführungsform ist jede Wicklungskonfiguration und deren Zuordnung in den jeweiligen Träger automatisiert darstellbar. Eine mit diesem vorteilhaften Verfahren hergestellte und eingebrachte Motorwicklung stellt sicher, dass die Konfiguration der eingebrachten Wicklung den Vorgaben entspricht.

Gemäß einer vorteilhaften Ausführungsform der vorliegenden Erfindung sind alle Prozesse und/oder Anlagen definiert, die eine hohe Flexibilität bei der Realisierung der Fahrwege eines Magnetbahnsystems, zum Beispiel einer Magnetschwebebahn, ermöglichen.

Vorteilhafterweise sind zudem alle Prozesse und/oder Anlagen definiert, die zur Steigerung der Verfügbarkeit und Wirtschaftlichkeit des Fahrweges selbst sowie der Vorrichtungen dienen.

*Bestandteil der* vorliegenden Erfindung *ist* des Weiteren mindestens ein elektrischer Leiter, insbesondere Wanderfeldleiter, zum Beispiel Wicklungsstrang, zur Verfügung stellbar, insbesondere
- formbar, zum Beispiel ausrichtbar und/oder biegbar und/oder kröpfbar und/oder wickelbar, und/oder
- aufnehmbar und/oder
- in mindestens einem Träger, insbesondere in mindestens einem Stator mindestens eines Linearmotors, zum Beispiel in mindestens einem im Wesentlichen Stahl und/oder Beton aufweisenden Fahrbahnträger einer Magnetschwebebahn, anbringbar
- mittels mindestens einer *Montage*vorrichtung gemäß der vorstehend dargelegten Art und/oder
- mittels des Verfahrens gemäß der vorstehend dargelegten Art.

Die vorliegende Erfindung betrifft schließlich die Verwendung mindestens einer *Montage*vorrichtung gemäß der vorstehend dargelegten Art und/oder eines Verfahrens gemäß der vorstehend dargelegten Art zur Herstellung und/oder Verlegung mindestens eines elektrischen Leiters mindestens eines Linearmotors, zum Beispiel zur Herstellung und/oder zur Montage mindestens eines, insbesondere einphasigen und/oder dreiphasigen, Wicklungsstrangs, an und/oder in mindestens einem/n Fahrbahnträger aus Stahl und/oder aus Beton einer Magnetschwebebahn.

Das Einsatzziel der vorliegenden Erfindung ist also insbesondere die flexible Verarbeitung und/oder Montage des elektrischen Leiters eines Linearmotors, zum Beispiel die flexible und hochqualitative Ausrüstung der Langstatorwicklung eines Magnetbahnsystems.

### Kurze Beschreibung der Zeichnungen

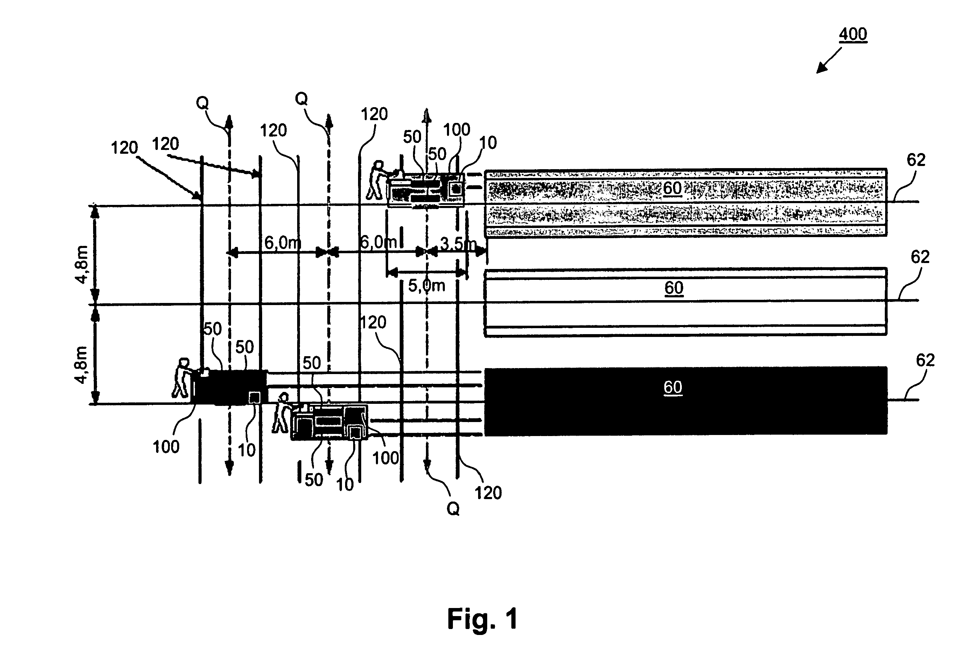

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 8 nachgeordneten Ansprüche verwiesen, andererseits werden weitere Ausgestaltungen, Merkmale und Vorteile der vorliegenden Erfindung nachstehend anhand der durch Fig. 1 bis Fig. 13B veranschaulichten zwei Ausführungsbeispiele näher erläutert.

Es zeigt:
- Fig. 1: in schematischer Darstellung eine Aufsicht auf ein erstes Aus- führungsbeispiel für eine Vorrichtung gemäß der vorliegenden Erfindung, die nach dem Verfahren gemäß der vorliegenden Er- findung arbeitet;
- Fig. 2: in schematischer Darstellung eine Seitenansicht der Vorrichtung aus Fig. 1;
- Fig. 3: in schematischer Darstellung eine Aufsicht auf ein zweites Aus- führungsbeispiel für eine Vorrichtung gemäß der vorliegenden Erfindung, die nach dem Verfahren gemäß der vorliegenden Er- findung arbeitet;
- Fig. 4A: in schematischer Darstellung eine Seitenansicht eines Statorpa- kets gemäß dem Stand der Technik;
- Fig. 4B: in perspektivischer Darstellung eine Aufsicht von schräg oben auf das Statorpaket aus Fig. 4A;
- Fig. 5A: in perspektivischer Darstellung eine Aufsicht von schräg oben auf zwei gemäß dem Stand der Technik verbundene Statorpake- te;
- Fig. 5B: in schematischer Darstellung eine Aufsicht auf den Übergangs- bereich der beiden Statorpakete aus Fig. 5A;
- Fig. 5C: in schematischer Darstellung eine Seitenansicht auf den Über- gangsbereich aus Fig. 5B;
- Fig. 5D: in schematischer Darstellung eine Querschnittansicht eines der Statorpakete aus Fig. 5A;
- Fig. 6: in schematischer Darstellung ein erstes Ausführungsbeispiel für die Verschaltung der Abschnitte des elektrischen Leiters gemäß der vorliegenden Erfindung;
- Fig. 7A: in schematischer Darstellung ein zweites Ausführungsbeispiel für die Verschaltung des elektrischen Leiters gemäß der vorliegen- den Erfindung an einem ersten Trägerübergang;
- Fig. 7B: in schematischer Darstellung die Verschaltung des elektrischen Leiters aus Fig. 7A an einem zweiten Trägerübergang;
- Fig. 7C: in schematischer Darstellung die Verschaltung des elektrischen Leiters aus Fig. 7A an einem dritten Trägerübergang;
- Fig. 7D: in schematischer Darstellung die Verschaltung des elektrischen Leiters aus Fig. 7A an einem vierten Trägerübergang;
- Fig. 8: in schematischer Darstellung eine Querschnittansicht des Trä- gers aus Fig. 7A;
- Fig. 9: in schematischer Darstellung ein Ablaufdiagramm für ein gemäß der vorliegenden Erfindung ausgestaltetes Verfahren, nach dem das Kontrollsystem der Verarbeitungseinrichtung aus Fig. 1 ar- beitet;
- Fig. 10: in schematischer Darstellung eine Ansicht der Unterseite eines mit zwei gemäß dem Stand der Technik geformten L[ang]S[tator]W[icklungen] ausgerüsteten Trägers;
- Fig. 11: in schematischer Darstellung eine Ansicht der Unterseite eines Ausführungsbeispiels für einen mit zwei gemäß dem Verfahren der vorliegenden Erfindung geformten L[ang]S[tator]W[icklungen] ausgerüsteten Träger;
- Fig. 12: in schematischer Darstellung die zwei Wicklungstypen der L[ang]S[tator]W[icklungen] aus Fig. 11;
- Fig. 13A: in schematischer Darstellung ein zweites Ausführungsbeispiel für eine gemäß dem Verfahren der vorliegenden Erfindung geformte L[ang]S[tator]W[icklung], die zur Bereitstellung einer reduzierten Antriebsleistung ausgebildet ist; und
- Fig. 13B: in schematischer Darstellung eine Aufsicht auf einen mit zwei L[ang]S[tator]W[icklungen] aus Fig. 13A ausgestatteten Träger.

Gleiche oder ähnliche Ausgestaltungen, Elemente oder Merkmale sind in Fig. 1 bis Fig. 13B mit identischen Bezugszeichen versehen.

### Bester Weg zur Ausführung der vorliegenden Erfindung

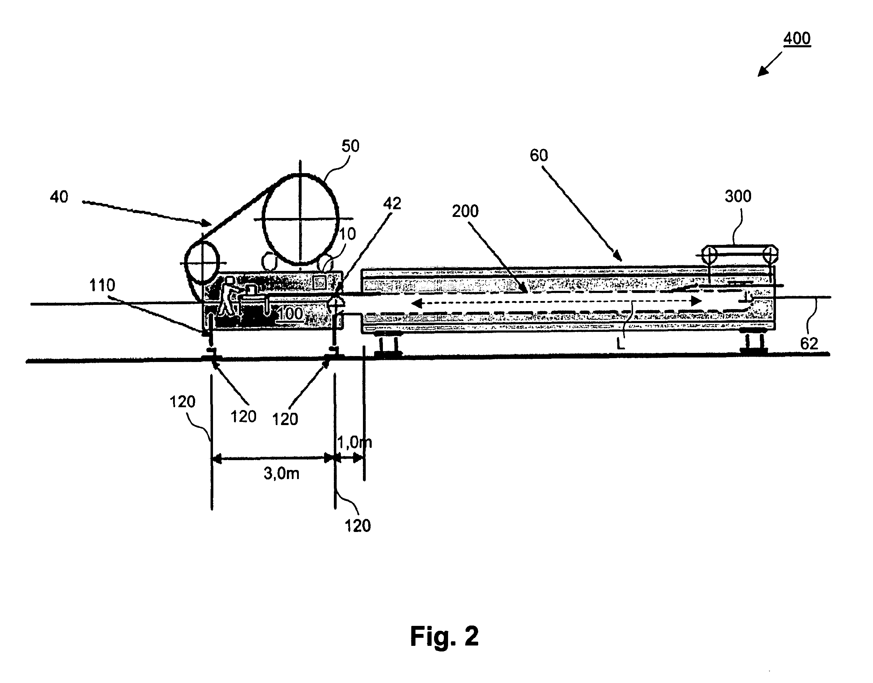

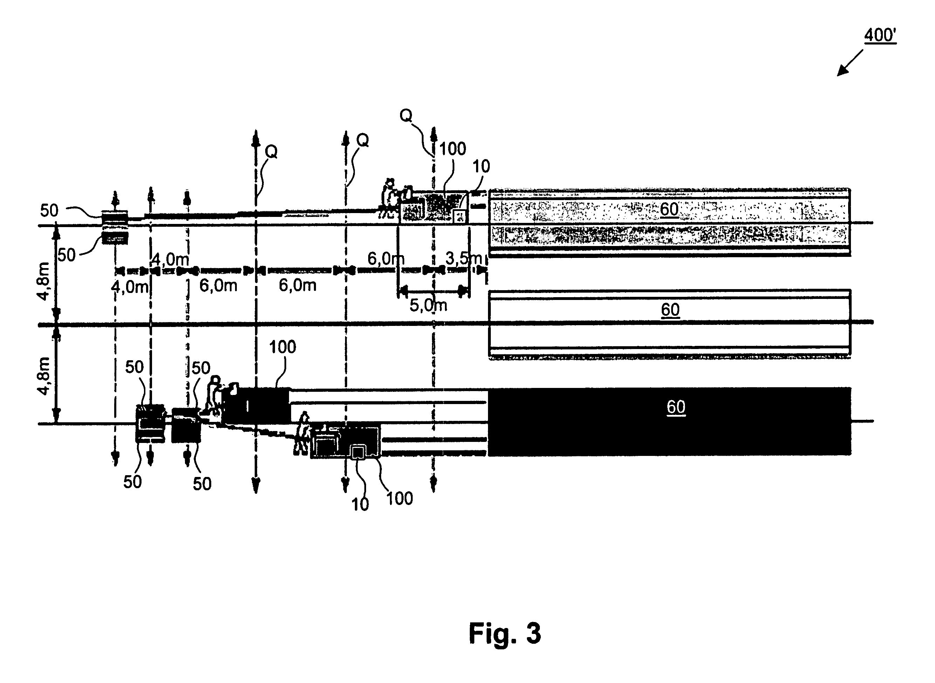

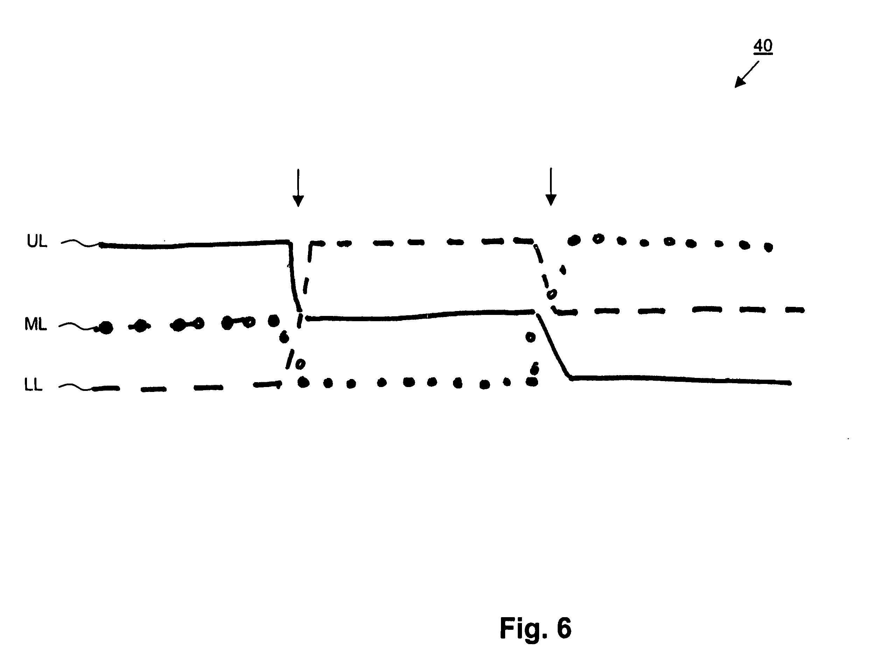

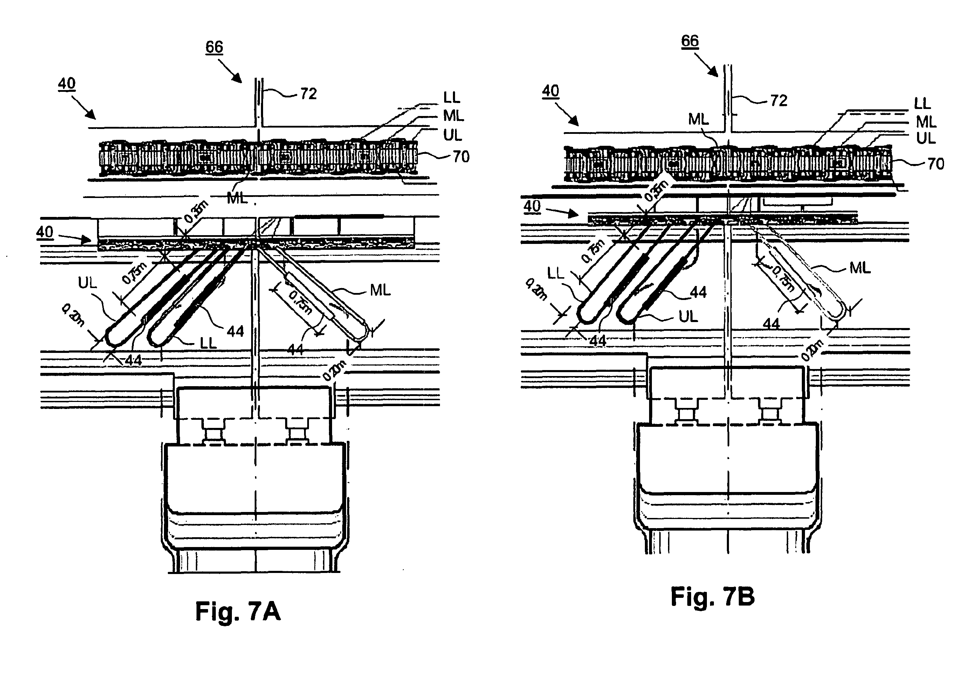

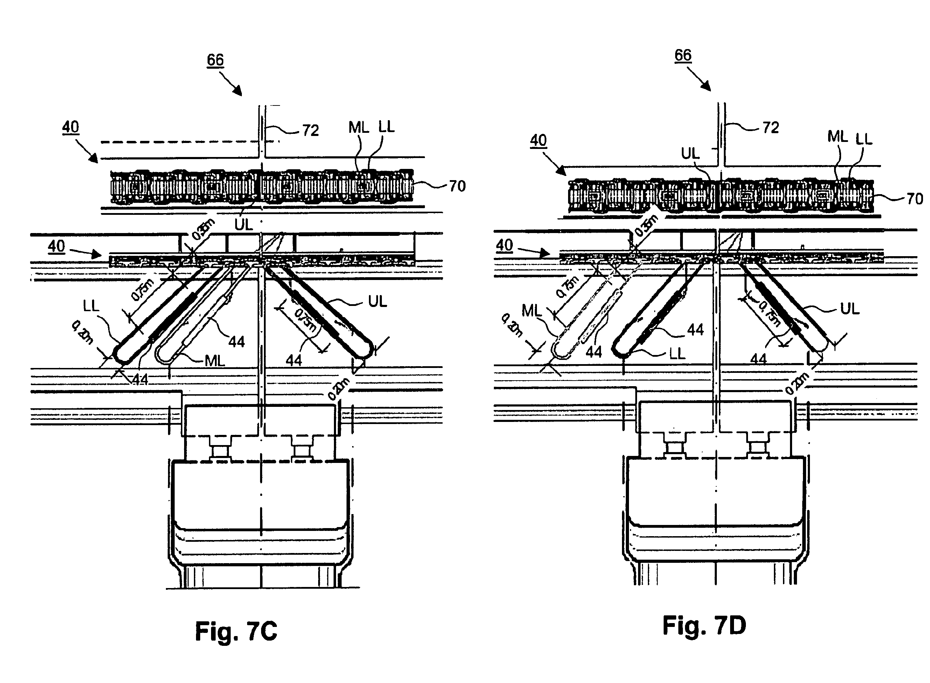

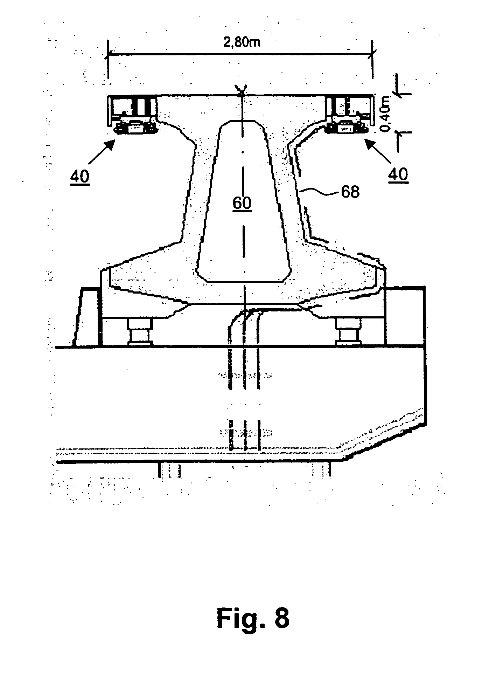

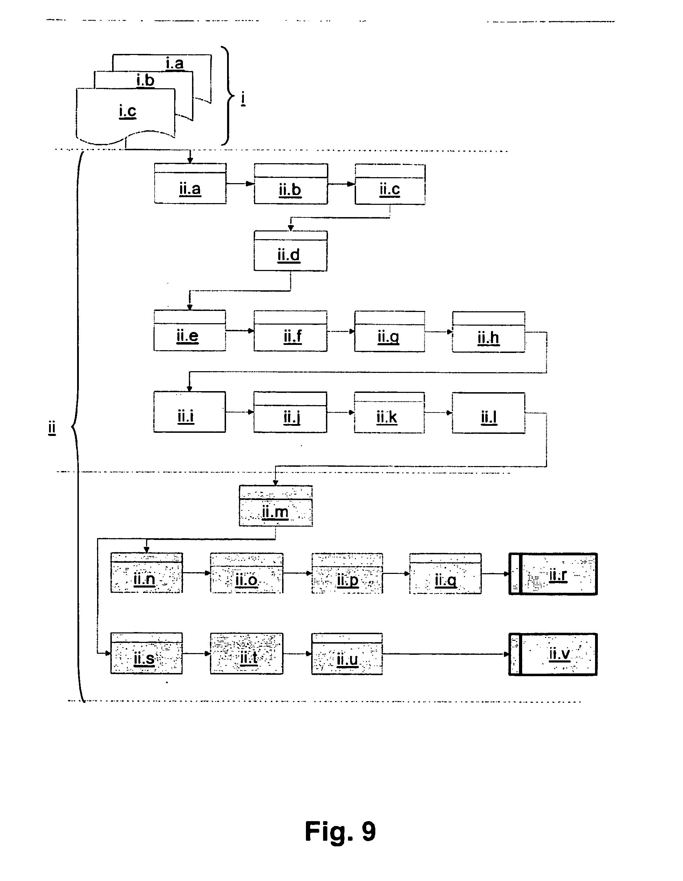

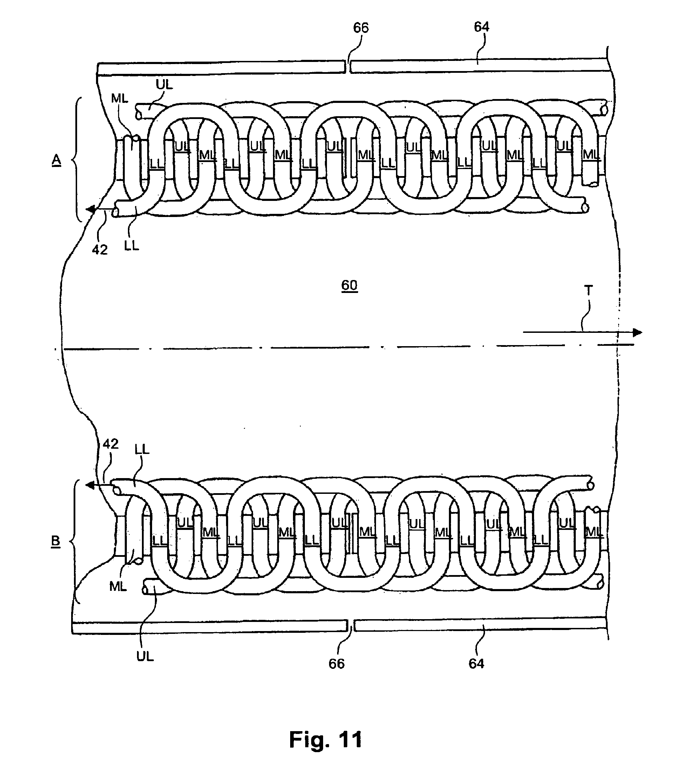

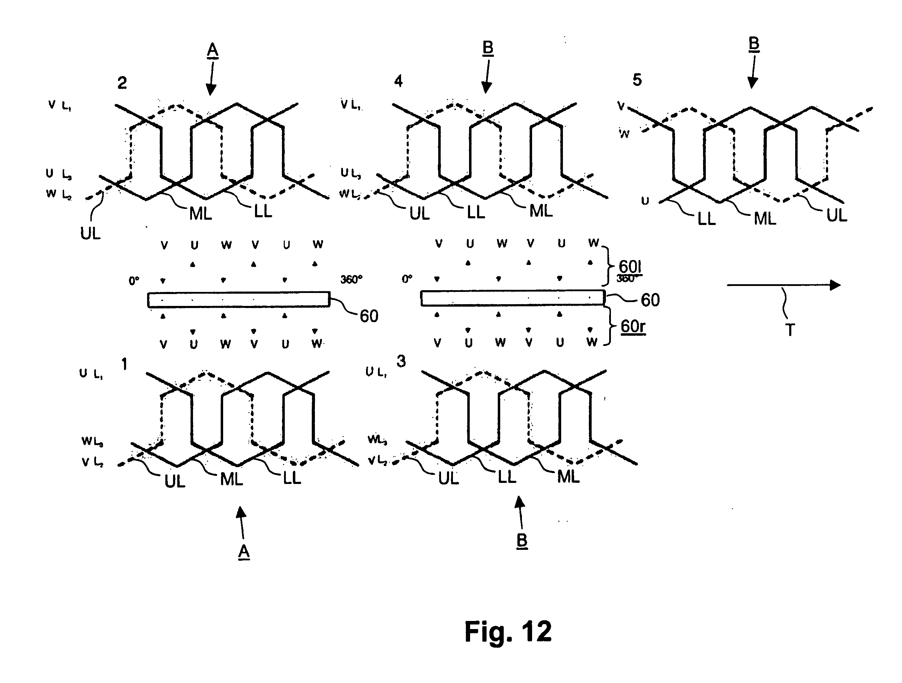

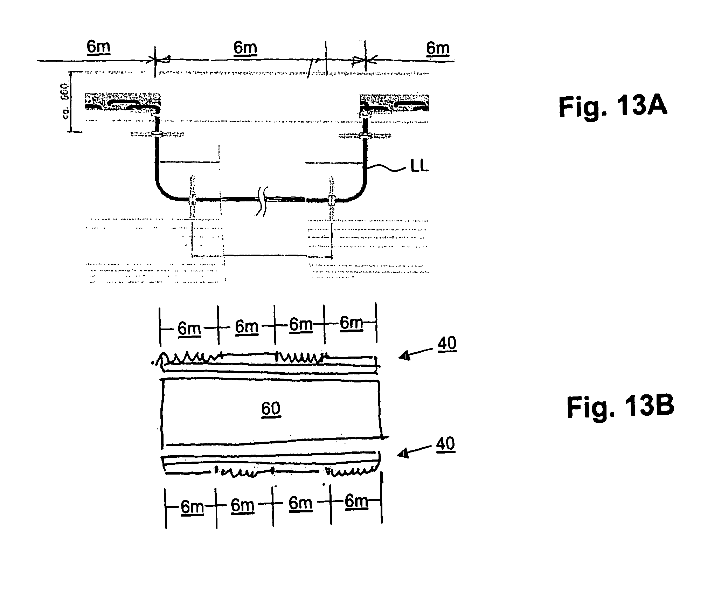

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben)
- sowohl auf das in Fig. 1 und in Fig. 2 dargestellte Ausführungsbeispiel für eine Vorrichtung 400 gemäß der vorliegenden Erfindung
- als auch auf das in Fig. 3 dargestellte Ausführungsbeispiel für eine Vorrichtung 400' gemäß der vorliegenden Erfindung
- als auch auf das in Fig. 6 dargestellte Ausführungsbeispiel für eine Verschaltung des elektrischen Leiters 40 gemäß der vorliegenden Erfindung
- als auch auf das in Fig. 7A, in Fig. 7B, in Fig. 7C, in Fig. 7D dargestellte Ausführungsbeispiel für eine Verschaltung des elektrischen Leiters 40 gemäß der vorliegenden Erfindung
- als auch auf das in Fig. 8 dargestellte Ausführungsbeispiel für einen mit den elektrischen Leitern aus Fig. 7A ausgestatteten Träger
- als auch auf das in Fig. 9 dargestellte Ausführungsbeispiel für ein gemäß der vorliegenden Erfindung ausgestaltetes Verfahren, nach dem das Kontrollsystem der Verarbeitungseinrichtung aus Fig. 1 arbeitet,
- als auch auf das in Fig. 11 und in Fig. 12 dargestellte Ausführungsbeispiel für den elektrischen Leiter 40 gemäß der vorliegenden Erfindung
- als auch auf das in Fig. 13A und in Fig. 13B dargestellte Ausführungsbeispiel für einen mit den elektrischen Leitern aus Fig. 11 ausgestatteten Träger.

Die in Fig. 1 bis Fig. 13B dargestellten Maßangaben sollen lediglich beispielhaft die Größenverhältnisse wiedergeben.

Im anhand Fig. 1 und anhand Fig. 2 veranschaulichten ersten Ausführungsbeispiel der vorliegenden Erfindung ist eine Vorrichtung 400, insbesondere eine Montagevorrichtung, gezeigt, die nach dem Verfahren gemäß der vorliegenden Erfindung arbeitet und mehrere Funktionsteile aufweist, nämlich
- ein Ausführungsbeispiel einer Verarbeitungseinrichtung 100, nämlich eine einphasige oder dreiphasige Biege- und Kröpfeinrichtung,
- ein Ausführungsbeispiel einer Aufnahmeeinrichtung 200, nämlich eines Förderbands, und
- ein Ausführungsbeispiel einer Ausrüstungseinrichtung 300, insbesondere einer Verlegeeinheit, nämlich einer Eindruckeinrichtung.

Die Vorrichtung 400 weist insgesamt drei Biege- und Kröpfeinrichtungen 300 auf, wobei diese Biege- und Kröpfeinrichtungen 100 jeweils dazu ausgelegt sind, einen zu verarbeitenden elektrischen Leiter, nämlich ein L[ang]S[tator]W[icklungs]-Kabel 40, aus einem Vorrat 50, nämlich aus einer Kabeltrommel, geregelt abzuziehen und gemäß den Vorgaben eines computergestützten Kontrollsystems (IMS) in einem Biege- und Kröpfprozess zu formen.

Jeder Biege- und Kröpfeinrichtung 100 ist jeweils mindestens eine der Verlegeeinheiten oder Eindruckeinrichtungen 300 zugeordnet.

Alternativ oder in Ergänzung hierzu ist jeder Verlegeeinheit oder Eindruckeinrichtung 300 mindestens eine der Biege- und Kröpfeinrichtungen 100 zugeordnet.

Mindestens eine der Biege- und Kröpfeinrichtungen 100 bildet mit mindestens einer der Eindruckeinrichtungen 300 und optionalerweise mit einem der Förderbänder 200 eine Biege-, Kröpf- und Verlegeeinheit (BKV).

Dabei kann, wie in Fig. 1 und in Fig. 3 dargestellt, ein Träger 60
- mittels einer Biege-, Kröpf- und Verlegeeinheit (BKV) oder
- mittels zweier Biege-, Kröpf- und Verlegeeinheiten (BKVs)
mit dem LSW-Kabel 40 ausgerüstet werden.

Bei dem in Fig. 1 und in Fig. 2 dargestellten ersten Ausführungsbeispiel der Vorrichtung 400 sind jeder Biege- und Kröpfeinrichtungen 100 zwei Kabeltrommeln 50 zugeordnet, wobei die Kabeltrommeln 50 jeweils über den Biege- und Kröpfeinrichtungen 100 angeordnet sind.

Die Biege- und Kröpfeinrichtungen 100 weisen jeweils Räder 110 auf, so dass sie auf der jeweiligen Biege- und Kröpfeinrichtungen 100 zugeordneten Schienen 120 bewegt werden können.

Die Bewegungsrichtung (Bezugszeichen Q) der Biege- und Kröpfeinrichtungen 100 ist im Wesentlichen senkrecht zur Längsachse 62 eines der jeweiligen Biege- und Kröpfeinrichtung 100 zugeordneten und mit dem LSW-Kabel 40 auszurüstenden Trägers 60, nämlich eines Stators eines Linearmotors, im Speziellen eines Fahrwegträgers, wie etwa eines Stahl-, Beton- oder Hybridträgers, einer Magnetschwebebahn.

Das Förderband 200 ist dazu ausgelegt, das von der Biege- und Kröpfeinrichtung 100 zur Verfügung gestellte und geformte LSW-Kabel 40 zur gewünschten Montagestelle am Träger 60 zum Befördern. Zu diesem Zweck ist das Förderband im Wesentlichen entlang (Bezugszeichen L) der Richtung der Längsachse 62 des auszurüstenden Trägers 60 bewegbar.

Vorteilhafterweise kann das Förderband 200 als Schwergummitransportband mit Lamellen ausgebildet sein und die Motorwicklung in Gebrauchslage befördern. Hierbei entspricht der Lamellenabstand zweckmäßigeweise in etwa einer halben Polteilung, wodurch nach der Aufnahme des ersten Mäanders die folgenden Mäander in gleichem Abstand provisorisch fixiert werden.

Ferner ist eine Ausgestaltung des Förderbands 200 als schmales Gummitransportband mit Lamellen möglich, wobei dieses Gummitransportband die Motorwicklung vorzugsweise auf dem Kopf oder in der Ausrichtung des Trägers 60 befördert.

Hierbei kann das Transportband gleichzeitig zur Drehbewegung des Bandes eine rückwärtige translatorische Bewegung durchführen.

Des Weiteren ist es möglich, dass sich ein Eindruckrad oder eine Eindruckvorrichtung von einer anderen Richtung zur Statorfläche hin bewegt.

Eine weitere - hier aus Gründen der Übersichtlichkeit graphisch nicht dargestellte - mögliche Ausgestaltung der Aufnahmeeinrichtung 200 besteht in einer Aufhängung mit transversen, sich in definierten Abständen voneinander befindlichen Pendelaufhängungen.

Der elektrische Leiter kann an diesen Pendelaufhängungen in gleichem Abstand mittels zweier Bänder gehalten sein, wobei diese Bänder optionalerweise nach der Verlegung des elektrischen Leiters 40 abgetrennt werden können.

Die Eindruckeinrichtung 300 ist dazu ausgelegt, den Träger 60 mit dem L[ang]S[tator]W[icklungs]-Kabel 40, auszurüsten.

Das in Fig. 3 dargestellte, zweite Ausführungsbeispiel der Vorrichtung 400' unterscheidet sich von dem in Fig. 1 und in Fig. 2 dargestellten ersten Ausführungsbeispiel 400 dadurch, dass die Kabeltrommeln 50 jeweils dezentral, nämlich auf der dem Träger 60 abgewandten Seite der jeweiligen Biege- und Kröpfeinrichtung 100, angeordnet sind. Entsprechend der Bewegungsrichtung (Bezugszeichen Q), der Biege- und Kröpfeinrichtungen 100 sind auch die Kabeltrommeln 50 bewegbar, insbesondere verfahrbar.

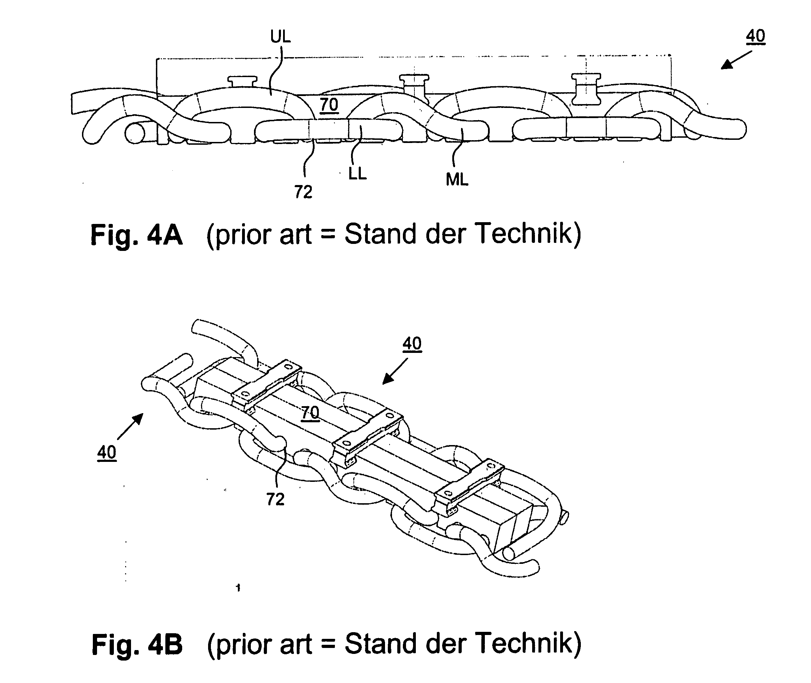

Fig. 4A zeigt in schematischer Darstellung eine Seitenansicht eines Statorpakets 70 mit dreiphasigen Wicklungen 40 für einen Linearmotor gemäß dem Stand der Technik.

Ein Statorpaket eines Langstators entspricht dem Ständer eines aufgeklappten dreiphasigen elektrischen Synchronmotors, in dessen Nuten 72 die dreiphasigen Wicklungen 40 eingelegt werden. Hierbei weisen die dreiphasigen Wicklungen 40 drei Wicklungsstränge auf, nämlich eine untere Lage LL (= lower layer), eine mittlere Lage ML (= middle layer) und eine obere Lage UL (= upper layer).

Fig. 4B zeigt in perspektivischer Ansicht eine Aufsicht auf das Statorpaket 70, das jeweils zwölf Nuten aufweist, in die die jeweiligen Wicklungsstränge LL, ML, UL der Motorwicklung 40 eingedrückt sind. In Fig. 4B ist also die Statorbelegung eines zwölf Nuten aufweisenden Standardstatorpakets mit zwei dreiphasigen Wicklungen 40 dargestellt.

Fig. 5A, Fig. 5B, Fig. 5C, Fig. 5D zeigen ein Ausführungsbeispiel eines mit einer L[ang]S[tator]W[icklung] gemäß dem Stand der Technik ausgerüsteten Linearmotors, wobei insbesondere der Übergang zweier Statorpakete 70 dargestellt ist.

Wie in Fig. 5A und in Fig. 5B dargestellt ist, liegt der obere Wicklungsstrang UL am Trägerstoß oder Trägerübergang 66 in einer sogenannten freien Nut 66n.

Die in Fig. 5D für die L[ang]S[tator]W[icklung] angegebenen Maße sind beispielhafte Richtwerte; Abweichungen innerhalb der Freiraumbegrenzung F sind zulässig.

Der am Träger 60 angeordnete elektrische Leiter 40 gemäß dem Stand der Technik, insbesondere die in den Nuten 72 des Statorpakets 70 angeordnete Langstatorwicklung oder Erregerwicklung, ist räumlich so ausgebildet, dass die Entfernung der einzelnen Phasen OL, ML, UL zum Kern des Stators 60 unterschiedlich ausfällt.

Dies ist begründet in der physikalischen Notwendigkeit, die Wicklungen jeder Phase OL, ML, UL aneinander vorbeizuführen, und somit liegen die einzelnen Wicklungsstränge OL, ML, UL in unterschiedlichen räumlichen Lagen zueinander.

Als Ergebnis werden unterschiedliche Stromfelder in den einzelnen Phasen OL, ML, UL des Linearmotors, insbesondere des synchronen Linearmotors, erzeugt.

Gemäß dem Stand der Technik wird beim Ausrüsten des Trägers 60 mit dem elektrischen Leiter 40 stets zuerst die obere Lage UL, die auch als Phase 3 bezeichnet wird, verlegt. Ferner werden gemäß dem Stand der Technik
- in einem zweiten Verlegeschritt stets die mittlere Lage ML, die auch als Phase 2 bezeichnet wird, und
- in einem dritten Verlegeschritt stets die untere Lage LL, die auch als Phase 1 bezeichnet wird,
verlegt.

Die Einbaufolge verläuft also gemäß dem Stand der Technik in folgender Reihenfolge:
- oberer Wicklungsstrang UL,
- mittlerer Wicklungsstrang ML,
- unterer Wicklungsstrang LL.

Im Gegensatz zum Stand der Technik kann bei der vorliegenden Erfindung, wie in Fig. 6 dargestellt, ein planmäßiger beliebiger Lagentausch der Phasen LL, ML, UL durchgeführt werden.

Dieser Phasentausch basiert grundsätzlich auf einer physikalischen Durchtrennung der drei Wicklungsphasen LL, ML, UL des elektrischen Leiters 40 und auf einer anschließenden Überkreuz-Verschaltung dieser Phasen LL, ML, UL.

Hierzu wird der elektrische Leiter 40 nach Abschluss des Formungsprozesses und/oder nach Abschluss des Anbringens des elektrischen Leiters 40 an den Träger 60 und/oder im Träger 60, insbesondere am Übergang 66 (vgl. Fig. 11) einer Einheit oder eines Abschnitts des Trägers 60, abschnittsweise unterteilt.

Beispielsweise beim Verbinden von zwei mit jeweils einem Abschnitt des elektrischen Leiters 40 ausgerüsteten Trägereinheiten werden die jeweiligen Phasen LL, ML, UL der Abschnitte des elektrischen Leiters 40 verschaltet, insbesondere verbunden oder verkettet, beispielsweise vermufft, wobei mindestens zwei der jeweiligen Phasen LL, ML, UL der Abschnitte des elektrischen Leiters 40 alternierend oder vertauscht, insbesondere über Kreuz, verschaltet werden.

Die erste verlegte bzw. in den Träger 60 eingedrückte physikalische Wicklungslage wird somit beispielsweise elektrisch gebildet durch:
- die elektrische dritte Phase UL für beispielsweise ein Drittel eines beliebigen Trägerabschnitts, zumindest jedoch für eine Trägerlänge;
- die elektrische zweite Phase ML oder die elektrische erste Phase LL für beispielsweise das zweite Drittel eines beliebigen Trägerabschnitts, zumindest jedoch für eine Trägerlänge; und
- die elektrische erste Phase LL oder die elektrische zweite Phase ML für beispielsweise das dritte Drittel eines beliebigen Trägerabschnitts, zumindest jedoch für eine Trägerlänge.

Beispielsweise kann also die erste verlegte obere Lage UL im ersten Drittel eines beliebigen L[ang]S[tator]W[icklung]-Abschnitts die elektrische dritte Phase UL sein und an einem planmäßigen Trägerübergang 66 liegen.

Im zweiten Drittel des beliebigen L[ang]S[tator]W[icklung]-Abschnitts kann dann die erste verlegte obere Lage UL die elektrische zweite Phase ML oder die elektrische erste Phase LL sein und an einem planmäßigen Trägerübergang 66 liegen.

Die erste verlegte Lage UL im dritten Drittel des beliebigen L[ang]S[tator]W[icklung]-Abschnitts kann die elektrische erste Phase LL oder die elektrische zweite Phase ML sein und an einem planmäßigen Trägerübergang 66 liegen.

Entsprechend erfolgt die Verschaltung der verlegten bzw. hergestellten Wicklungsstränge LL, ML, UL (vgl. Fig. 6). Die Verschaltungsstellen, also die Stellen, an denen die Phasen LL, ML, UL getrennt und vermufft werden, sind in Fig. 6 mittels eines jeweiligen Pfeils markiert.

Eine weitere bevorzugte, vorliegend jedoch aus Gründen der Übersichtlichkeit graphisch nicht dargestellte Variante ist ein Tausch der jeweiligen Lage UL (= upper layer = obere Lage) zu ML (= middle layer = mittlere Lage), ML zu LL (= lower layer = untere Lage) und LL zu UL nach einem Drittel des Motorabschnitts und ursprüngliche UL zu LL, ursprüngliche ML zu UL und ursprüngliche LL zu ML nach einem weiteren Drittel des Motor abschnitts, jeweils an planmäßigen Trägerübergängen 66.

Mittels des Verschaltens der Phasen LL, ML, UL werden die vorstehend beschriebenen ungleichmäßig ausgebildeten Stromfelder der drei einzelnen Phasen OL, ML, UL ausgeglichen, denn alle Phasen sind im Verlauf eines Motorabschnitts der Langstatorwicklung des Linearmotors zu je einem Drittel der Abschnittslänge in der Lage UL, in der Lage ML und in der Lage LL verlegt.

Die vorliegende Erfindung ermöglicht also einen planmäßigen beliebigen Lagentausch der Phasen OL, ML, UL ohne jeglichen zusätzlichen Aufwand. Durch derartige Verlagerungen werden Asymmetrien eines dreiphasigen synchronen Linearmotors ausgeglichen.

Durch das abschnittsweise Unterteilen des elektrischen Leiters 40, insbesondere durch das Trennen des dreiphasigen LSW-Kabels, das beispielsweise an jedem Trägerübergang 66 durchgeführt wird, ist es möglich, die Herstellung und Verlegung der Wicklungsstränge des Linearmotors in einer Halle durchzuführen.

Ferner wird durch das abschnittsweise Unterteilen, insbesondere durch eine Einzelträgerverlegung, des elektrischen Leiters 40 erreicht, dass der elektrische Leiter 40 bei der vorliegenden Erfindung (vgl. zum Beispiel Fig. 11) am Trägerübergang 66 nicht, wie beim Stand der Technik (vgl. Fig. 5A und Fig. 5B), durch einen Dehnspalt 66n im freien Raum verläuft.

Im Zusammenhang mit der abschnittsweisen Unterteilung schlägt die vorliegende Erfindung eine besonders vorteilhafte Ausgestaltung der Vermuffung und deren Anordnung in einer neuen Weise vor (vgl. Fig. 7A, Fig. 7B, Fig. 7C, Fig. 7D).

Fig. 7A zeigt ein Verschaltungsbeispiel an einem ersten Trägerübergang 66 eines Linearmotors mit hundert Prozent Antrieb, wobei die Verbindung der elektrischen Leiter 40 der jeweiligen Trägereinheiten bei der zweiten Phase ML in einer Nut 72 des Trägers 60 von der Trägeraußenseite in Richtung der Trägerinnenseite verläuft.

Bei der Longitudinalansicht gemäß Fig. 7A verläuft die zweite Phase ML somit am Trägerübergang 66 s-förmig in der Nut 72, wobei die Nut 72 eine Freinut sein kann oder aber vom Träger 60 ummantelt sein kann.

Fig. 7B zeigt ein Verschaltungsbeispiel an einem zweiten Trägerübergang 66 des Linearmotors, wobei die Verbindung der elektrischen Leiter 40 der jeweiligen Trägereinheiten bei der zweiten Phase ML in einer Nut 72 des Trägers 60 im Vergleich zu Fig. 7A umgekehrt, nämlich von der Trägerinnenseite in Richtung der Trägeraußenseite verläuft.

Bei der Longitudinalansicht gemäß Fig. 7B verläuft die zweite Phase ML somit am Trägerübergang 66 in der Nut 72 spiegelbildlich zur in Fig. 7A dargestellten zweiten Phase ML, wobei die gedachte Spiegelachse dem Verlauf der Nut 72 entspricht; wiederum kann die Nut 72 eine Freinut sein oder aber vom Träger 60 ummantelt sein.

Fig. 7C zeigt ein Verschaltungsbeispiel an einem dritten Trägerübergang 66 des Linearmotors, wobei die Verbindung der elektrischen Leiter 40 der jeweiligen Trägereinheiten bei der dritten Phase UL in einer Nut 72 des Trägers 60 von der Trägeraußenseite in Richtung der Trägerinnenseite verläuft.

Bei der Longitudinalansicht gemäß Fig. 7C verläuft die dritte Phase UL somit am Trägerübergang 66 s-förmig in der Nut 72, wobei die Nut 72 eine Freinut sein kann oder aber vom Träger 60 ummantelt sein kann.

Fig. 7D zeigt ein Verschaltungsbeispiel an einem vierten Trägerübergang 66 des Linearmotors, wobei die Verbindung der elektrischen Leiter 40 der jeweiligen Trägereinheiten bei der dritten Phase UL in einer Nut 72 des Trägers 60 im Vergleich zu Fig. 7C umgekehrt, nämlich von der Trägerinnenseite in Richtung der Trägeraußenseite verläuft.

Bei der Longitudinalansicht gemäß Fig. 7D verläuft die dritte Phase UL somit am Trägerübergang 66 in der Nut 72 spiegelbildlich zur in Fig. 7C dargestellten dritten Phase UL, wobei die gedachte Spiegelachse dem Verlauf der Nut 72 entspricht; wiederum kann die Nut 72 eine Freinut sein oder aber vom Träger 60 ummantelt sein.

Jede der drei Phasen LL, ML, UL weist ein Verschaltungsmittel, insbesondere ein Verbindungs- oder Verkettungselement, nämliche eine Muffe 44 auf, wobei sich diese Muffe 44 beispielsweise über eine Länge von etwa 75 Zentimetern der jeweiligen Phase LL, ML, UL des elektrischen Leiters 40 erstrecken kann.

Die in Fig. 7A, in Fig. 7B, in Fig. 7C, in Fig. 7D dargestellten langgezogenen Schlaufen der drei Phasen LL, ML, UL können beispielsweise einen Durchmesser von etwa 20 Zentimetern aufweisen und sind vorteilhafterweise an ihrer jeweiligen Biegung, beispielsweise mittels einer weiteren Muffe, verstärkt.

Fig. 8 zeigt einen Querschnitt des mit zwei gemäß der vorliegenden Erfindung gewickelten elektrischen Leitern 40 ausgerüsteten Trägers 60 aus Fig. 7A, wobei die Schnittebene in Fig. 7A mittels der gestrichelten Linie S markiert ist.

Die Verarbeitungseinrichtung 100 weist optionalerweise mindestens ein Kontrollsystem 10, insbesondere mindestens ein computergestütztes I[ntegriertes]M[anagement]S[ystem], auf (vgl. Fig. 1, Fig. 2, Fig. 3).

Zum Erfassen von für das Verarbeiten des elektrischen Leiters 40 relevanten Daten und/oder Informationen kann das IMS 10 mit mindestens einer Detektoreinheit, insbesondere mit mindestens einer Messeinrichtung und/oder mit mindestens einem Sensor, ausgerüstet sein. Die Herstellung und Montage der Wicklungsstränge 40 des Linearmotors kann also mittels des IMS 10 automatisiert werden.

Das IMS 10 berechnet vorteilhafterweise für jeden Träger 60 das Wicklungsbild des elektrischen Leiters 40 und die jeweilige Verschaltungsstelle; beispielsweise berechnet das IMS 10, an welchem Träger 60 die neue Verschaltung, insbesondere der Phasentausch, stattfindet.

Das Wicklungsbild innerhalb eines LSW Abschnitts des LSW-Kabels 40 ist bis zum Phasentausch für jeden Träger 60 gleich. Das auf der gegenüberliegenden Seite des Trägers 60 angeordnete LSW-Kabel 40 hat vorzugsweise ein anderes Wicklungsbild, wobei auch der Phasentausch an anderen Stellen vorgesehen sein kann. Die Motorabschnitte können also auf den beiden Fahrbahnseiten des Trägers 60 versetzt zueinander angeordnet sein.

Das IMS 10 errechnet zweckmäßigerweise für jeden Träger 60 auf beiden LSW-Seiten automatisch das Wickelbild, ermittelt die Maschinendaten zur Herstellung der einzelnen Wicklungsstränge sowie die Daten für das Einlegen der Wicklungsstränge in die Statornuten 72.

Weiterhin ermittelt das IMS 10 vorzugsweise die Lage aller erforderlichen Anschlüsse für die Verschaltung der L[ang]S[tator]W[icklungen] 40 und sonstiger Ausrüstungsbaugruppen des betroffenen Trägers 60, zum Beispiel Lagereferenzleisten und/oder Stromschienen.

Das computergestützte Kontrollsystem (IMS) 10 ist vorzugsweise in der Biege- und Kröpfeinrichtung (SBK) 100 angeordnet. Die Zuordnung des IMS 10 zu den Baugruppen der Vorrichtung 400, 400', insbesondere der in der IMS 10 durchgeführte Planungsprozess, ist in Fig. 9 dargestellt.

Als Planungsgrundlage (Bezugszeichen i in Fig. 9) werden Systemdokumente i.a und/oder mindestens eine Trassierungsrichtlinie i.b und/oder mindestens eine Antriebsspezifikation i.c herangezogen.

Aufbauend auf dieser Planungsgrundlage i führt die IMS 10 die Datenberechnung und Datenbereitung (Bezugszeichen ii in Fig. 9) durch.

Hierbei wird in einem ersten Schritt ii.a die Trassierung der Transrapidstrecke ermittelt, insbesondere die Trassierung einer Spur A (Schritt ii.b in Fig. 9) bis zur Trassierung für beide Fahrbahnspuren, also für die linke Seite sowie für die rechte Seite, des Trägers 60 (Schritt ii.c in Fig. 9).

Daraufhin wird ein Katalog für die Fahrwegausrüstung erstellt (Schritt ii.d in Fig. 9). Mittels dieses Katalogs wird die Teilung der Stützen (Schritt ii.e in Fig. 9), die Teilung der Träger 60 (Schritt ii.f in Fig. 9), die Teilung der Module (Schritt ii.g in Fig. 9) und die Teilung der Statorpakete (Schritt ii.h in Fig. 9) des Trägers 60 ermittelt.

Daraufhin wird der Versatz der Motorwicklung der gegenüberliegenden Fahrbahnseiten des Trägers 60, also der linken Seite sowie der rechten Seite des Fahrwegträgers, berechnet (Schritt ii.i in Fig. 9).

Ferner werden die Koeffizienz der Antriebsperiode (Schritt ii.j in Fig. 9), die Positionslage der Lagereferenzleisten (Schritt ii.k in Fig. 9) und der Anschlusstyp, insbesondere der Phasentausch, der Motorwicklung für die linke Seite sowie für die rechte Seite des Fahrwegträgers 60 (Schritt ii.l in Fig. 9) ermittelt.

Die vorstehend ermittelten Daten und Informationen werden für die Biege-und Kröpfeinrichtung 100 sowie für die Ausrüstungseinrichtung 300 als Maschinendaten aufbereitet (Schritt ii.m in Fig. 9).

Insbesondere erfolgt die Aufbereitung der Daten und Informationen zur Festlegung
- der Teilung der Spuren in Motorsektionen (Schritt ii.n in Fig. 9),
- der Teilung der Motorsektionen in L[ang]S[tator]-Phasen (Schritt ii.o in Fig. 9),
- der Anzahl der Mäander pro jeweiliger Phase (Schritt ii.p in Fig. 9) und
- der Anzahl der Mäander pro jeweiligem Träger 60, jeweils für die linke Fahrbahnseite sowie für die rechte Fahrbahnseite (Schritt ii.q in Fig. 9).

Diese aufbereiteten Daten und Informationen dienen also als Maschinendaten für die Mäanderfertigung (Schritt ii.r in Fig. 9).

Des Weiteren erfolgt die Aufbereitung der im vorstehend beschriebenen Schritt ii.m ermittelten Maschinendaten zur Festlegung
- der Nutenbelegung am Trägerübergang 66 (Schritt ii.s in Fig. 9),
- der jeweiligen Phasenverschaltung und des jeweiligen Anschlussbilds der Träger 60 (Schritt ii.t in Fig. 9) sowie
- der sonstigen, insbesondere der nicht phasenverschalteten, Anschlussbilder pro jeweiligem Träger 60 (Schritt ii.u in Fig. 9).

Diese aufbereiteten Daten dienen also als Maschinendaten für die Mäanderverlegung im Träger 60 (Schritt ii.v in Fig. 9).

Die vorliegende Erfindung bietet den Vorteil, dass die Prozessparameter bei der Herstellung und Verlegung der Wicklungsstränge konstant gehalten werden können, insbesondere dass die Prozessparameter bei der Fertigung des elektrischen Leiters 40 sowie bei der Ausrüstung des Trägers 60 mit dem elektrischen Leiters 40 gesteuert werden können.

Hierzu ist die Fertigungseinrichtung oder Verarbeitungseinrichtung 100 durch mindestens eine zentrale Steuereinheit und/oder durch mindestens einen zentralen Rechner steuerbar.

Der Zentralrechner kann die Maschinendaten vom IMS 10 übernehmen. Das IMS 10 ist also in der Lage, aus den systemspezifischen Daten und Informationen alle für die Herstellung und Verlegung des elektrischen Leiters 40 erforderlichen Daten und Informationen zu berechnen und als Maschinendaten und -informationen an die zentrale Steuereinheit zu übergeben; hierzu zählen beispielsweise die Anzahl der Mäander und die Länge der ungebogenen Leitung.

Das Übernehmen der vom IMS 10 zur Verfügung gestellten Daten und Informationen dient beispielsweise zur Steuerung eines Kabelabwicklers der Fertigungseinrichtung oder Verarbeitungseinrichtung 100. Hierbei kann insbesondere die beispielsweise mittels mindestens eines Servomotors erfolgende Abwicklungsbewegung der Kabeltrommel gesteuert werden.

Ferner kann zur Steuerung des Kabelabwicklers der Kabelverbrauch, beispielsweise anhand mindestens einer Messeinrichtung, ermittelt werden. Des Weiteren ist es möglich, zur Steuerung des Kabelabwicklers die Restlänge des Vorrats und den Zeitpunkt des Trommeltausches zu ermitteln.

Mittels der vom IMS 10 übernommenen Maschinendaten und - informationen kann ferner die Biege- und Kröpfeinrichtung 100 gesteuert werden. Insbesondere sind
- der Bewegungsablauf und das Schließen der Biegebacken,
- der Bewegungsablauf und das Schließen der Kröpfbacken,
- die Transferbewegung der Mäander bis zur Aufnahmevorrichtung 200,
- die Herstellung einer genauen Anzahl von Mäandern einer definierten Phase,
- die Lieferung der Anschlusslängen in Abhängigkeit vom jeweiligen Trägertyp, beispielsweise in Abhängigkeit von der jeweiligen Trägerlänge, und/oder in Abhängigkeit vom jeweiligen Typ des Anschlusses,
- die Biegeparameter, beispielsweise die Verweildauer in den Biegebacken und/oder der Anpressdruck, und/oder
- die Kröpfparameter, beispielsweise die Verweildauer in den Kröpfbacken und/oder die Kröpfhöhe,
steuerbar.

Ferner können die Prozessparameter gemäß einer vorteilhaften Ausführungsform der vorliegenden Erfindung auch aufgrund der Anordnung der Funktionseinheiten 100, 200, 300 der Vorrichtung 400 in einem geschlossenen oder zumindest überdachten Gebäude konstant gehalten werden.

Dies bietet einerseits den Vorteil der Witterungsunabhängigkeit, insbesondere der Unabhängigkeit von Wind, von Regen und/oder von Lichtverhältnissen.

Eine konstante Prozesstemperatur, insbesondere eine konstante Umgebungstemperatur in der Trägerausrüstungshalle und die Verwendung einer vortemperierten Leitungstrommel, beeinflussen zum Beispiel die Steifigkeit des elektrischen Leiters 40, insbesondere
- Kräfte beim Abziehen der Leitung 40 vom Vorrat 50,
- Biegekräfte beim Biege-/Kröpfprozess,
- Rückstellkräfte und/oder Formhaltigkeit des elektrischen Leiters 40 beim Biege/Kröpfprozess,
- die Prozessgeschwindigkeit und/oder
- die Kraft beim Eindrücken des elektrischen Leiters 40 in den Träger 60.

Ferner bietet die Räumlichkeit einer Halle Vorteile, wie etwa kurze Wege und eine schnelle Verfügbarkeit von Material, von Einrichtungen und von Personal.

Somit kann die Produktivität gesteigert werden, insbesondere
- durch den Einsatz einer (halb)automatisierten Integration der Ausrüstungskomponenten,
- durch die Steigerung der Qualität,
- durch konstante Fertigungsbedingungen und/oder
- durch den Einsatz von Kontrolleinrichtungen, zum Beispiel von Hilfsvorrichtungen und/oder von Projektoren, wie etwa von Projektoren zur Projektion von Anschluss- und Belegungsbildem der Ausrüstungsteile direkt auf dem Werkstück, zum Beispiel auf dem Träger 60.

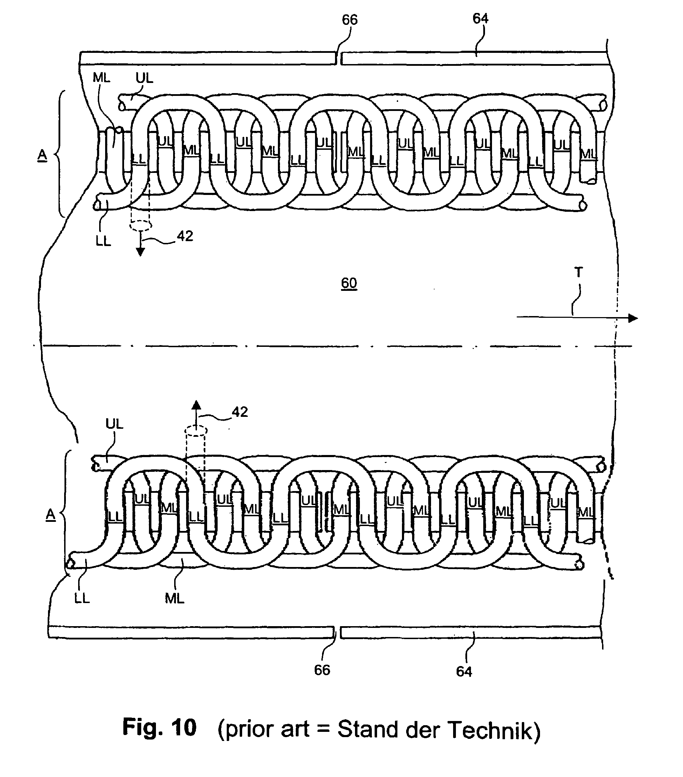

In Fig. 10 ist eine Aufsicht auf die Unterseite eines mit zwei gemäß dem Stand der Technik gewickelten elektrischen Leitern, nämlich mit zwei nach einem ersten Wicklungstyp A gewickelten L[ong]S[tator]W[inding]-Kabeln 40, ausgerüsteten Trägers 60 dargestellt.

Der Fahrweg 60 ist aus zwei Trägereinheiten zusammengesetzt, wobei der Trägerübergang 66 in Fig. 10 schematisch dargestellt ist. Die Trassierung T des Fahrwegträgers 60 erfolgt in entgegengesetzter Richtung zu den Anschlüssen 42 des Fahrwegträgers 60.

Beim in der oberen Hälfte der Fig. 10 dargestellten LSW-Kabel 40, das in Bezug auf die Richtung der Trassierung T an der linken Seite des Trägers 60 angeordnet ist, weist der Mäander der unteren Lage LL zum Träger 60 hin und kann an den Träger 60 angeschlossen werden.

Hingegen weist der Mäander der unteren Lage LL bei dem LSW-Kabel 40, das in Bezug auf die Richtung der Trassierung T an der rechten Seite des Trägers 60 angeordnet ist, vom Träger 60 weg und kann nicht an die Trägerwangen angeschlossen werden.

Vielmehr müssen die vorgebogenen Mäander erst unter entsprechendem Aufwand und bei entsprechender Qualitätseinbuße entformt bzw. zum Anschluss des Trägers 60 hin gebogen werden. Aus diesem Grunde verbleiben an der Anschlussstelle freie Nuten ohne Antrieb, also Nuten, in denen keine Wicklungsstränge verlegt sind. Derartige freie Nuten bedingen eine Antriebslücke für das Magnetschwebefahrzeug.

Fig. 10 zeigt also den Stand der Technik mit dem gleichen Wicklungsbild auf der linken LSW-Seite des Trägers 60 und auf der rechten LSW-Seite des Trägers 60.

Hingegen wird gemäß der vorliegenden Erfindung der Träger 60 vorteilhafterweise
- mit einem nach einem ersten Wicklungstyp A gewickelten LSW-Kabel 40 und
- mit einem nach einem zweiten Wicklungstyp B gewickelten LSW-Kabel 40
ausgerüstet.

Fig. 11 zeigt eine Aufsicht auf die Unterseite eines
- mit einem nach dem Wicklungstyp A gewickelten LSW-Kabel 40 und
- mit einem nach dem Wicklungstyp B gewickelten LSW-Kabel 40 ausgerüsteten Trägers 60, wobei die Wicklungsbilder des Wicklungstyps A und des Wicklungstyps B spiegelsymmetrisch sind.

Sowohl beim Wicklungstyp A als auch beim Wicklungstyp B weist die obere Lage UL zum Träger 60 hin und kann angeschlossen werden, was in Fig. 11 jeweils mittels eines Pfeils 42 dargestellt ist. Die jeweiligen Enden der oberen Lage UL liegen also auf der vom Fahrweg 64, beispielsweise vom Plattenfahrweg, abgewandten Seite des Trägers 60.

Dieser erste Wicklungstyp (<--> Bezugszeichen A) und dieser zweite Wicklungstyp (<--> Bezugszeichen B) sind in Fig. 12 genauer dargestellt.

Hierbei sind die Anschlussstellen der LSW-Kabel 40 mit den Bezugszeichen U, V und W bezeichnet. Die mit Nummer 1 bzw. mit Nummer 2 bezeichneten LSW-Kabel 40 sind nach dem Wicklungstyp A geformt, die mit mit Nummer 3 bzw. mit Nummer 4 bzw. mit Nummer 5 bezeichneten LSW-Kabel 40 sind hingegen nach dem Wicklungstyp B geformt.

In der mittleren Hälfte der Fig. 12 ist schematisch eine Aufsicht auf einen mit jeweils einem an der linken Fahrwegseite 601 und an der rechten Fahrwegseite 60r angeordneten LSW-Kabel 40 ausgerüsteten Träger 60 dargestellt.

Die Herstellung oder Realisierung von Wicklungstypen A und B gemäß Transrapid-Spezifikationen kann für Projekte erforderlich sein. Im Gegensatz zu Technologien gemäß dem Stand der Technik kann dies bei einer vorteilhaften Ausführungsform der vorliegenden Erfindung ohne erhöhten logistischen Aufwand realisiert werden.

Sofern zur Ausrüstung eines der Träger 60 eine der Biege- und Kröpfeinrichtungen 100 eingesetzt wird, ist diese Biege- und Kröpfeinrichtung 100 vorteilhafterweise sowohl zur Formung des elektrischen Leiters 40 nach Art des Wicklungstyps A als auch nach Art des Wicklungstyps B ausgebildet.

Im Gegensatz zur vorliegenden Erfindung kann gemäß dem Stand der Technik bei Verwendung einer (universellen) Biege- und Kröpfeinrichtung, insbesondere einer BKV, die sowohl zur Formung des elektrischen Leiters 40 nach Art des Wicklungstyps A als auch zur Formung des elektrischen Leiters nach Art des Wicklungstyps B ausgebildet ist, in Abhängigkeit von der Auszugsrichtung in den Träger 60 nur einer der beiden Wicklungstypen A oder B realisiert werden.

Dies kann, wie vorstehend beschrieben, zu dem Nachteil führen, dass die Wicklungsrichtung am Trägerübergang auf einer Seite zum Träger 60 hin führt und auf der gegenüber liegenden Seite vom Träger 60 ausgeht.

Für die vom Träger 60 nach außen gehenden Mäander bringt dies den Nachteil mit sich, dass die Mäander manuell entformt werden müssen, um am Träger 60 bzw. mit dem Träger 60 verbunden zu werden, und dass der Stator 60 nicht komplett belegt ist, insbesondere in Form einer fehlenden Nutenbelegung. Diese Nachteile entfallen durch Realisierung der beiden Wicklungstypen A und B, wie in Fig. 11 gezeigt.

Bei Verwendung zweier Biege- und Kröpfeinrichtungen 100, insbesondere zweier Biege-, Kröpf- und Verlegeeinheiten (BKVs), zur Ausrüstung eines der Träger 60 (vgl. Fig. 3) ist gemäß einer vorteilhaften Ausführungsform der vorliegenden Erfindung eine der beiden Biege- und Kröpfeinrichtungen 100, insbesondere der beiden BKVs, zur Formung des elektrischen Leiters 40 nach Art des Wicklungstyps A und die andere Biege- und Kröpfeinrichtung 100, Insbesondere die weitere BKV, zur Formung des elektrischen Leiters 40 nach Art des Wicklungstyps B ausgebildet.

Mittels der vorliegenden Erfindung können also die vorstehend beschriebenen Nachteile des Stands der Technik durch den Einsatz zweier jeweils auf einen Wicklungstyp spezialisierter Biege- und Kröpfeinrichtungen 100, insbesondere einer Biege-, Kröpf- und Verlegeeinheit für den Wicklungstyp A und einer Biege-, Kröpf- und Veriegeeinheit für den Wicklungstyp B, eliminiert werden.

Der Einsatz von auf einen Wicklungstyp spezialisierten Biege- und Kröpfeinrichtungen 100 ist insbesondere bei stationären Biege- und Kröpfeinrichtungen 100 vorteilhaft, also insbesondere wenn alle Funktionseinheiten 100, 200, 300 der Vorrichtung 400 in einem geschlossenen oder zumindest überdachten Gebäude, nämlich in einer Halle, im Speziellen in einer Trägerausrüstungshalle, untergebracht sind. Beispielsweise zeigen Fig. 1, Fig. 2, Fig. 3 die Verlegung des LSW-Kabels 40 in der Trägerausrüstungshalle.

Der Einsatz von auf die Wicklungstypen A und B spezialisierten Biege-und Kröpfeinrichtungen 100 ist bei einer mobilen Vorrichtung gemäß dem Stand der Technik, also wenn die Verlegung des LSW-Kabels 40 auf der Baustelle stattfindet, aufgrund der Räumlichkeit und der Maschinengrößen unter Baustellenbedingungen wesentlich aufwändiger, weshalb sich in diesem Falle die Investitionskosten für die Verlegezüge vervielfachen.

Im Vergleich zu den Investitionskosten für spezialisierte Biege- und Kröpfeinrichtungen 100 einer Vorrichtung 400 bzw. 400' in einem geschlossenen oder zumindest überdachten Gebäude ist dies also unwirtschaftlich.

Zum Bereitstellen einer verminderten Antriebsleistung des Linearmotors kann der elektrische Leiter 40, wie in Fig. 13A und in Fig. 13B dargestellt, bereichsweise nicht geformt sein, insbesondere auf entsprechend anteiliger Länge ungewickelt zur Verfügung gestellt werden.

In Fig. 13A ist aus Gründen der Übersichtlichkeit der Bereich ohne Wicklung nur für die untere Lage oder erste Phase LL dargestellt. Die Darstellung des Bereichs ohne Wicklung gilt aber für alle Lagen LL, ML, UL des elektrischen Leiters 40.

Der Prozentsatz der Antriebsleistung ist individuell gestaltbar. Zur Bereitstellung eines Antriebs mit fünfzig Prozent Antriebsleistung weist der elektrische Leiter 40 beispielsweise wechselweise Abschnitte mit jeweils sechs Metern (= 6m in Fig. 13A und in Fig. 13B) gewickelter Leitung und sechs Metern (= 6m in Fig. 13A und in Fig. 13B) gestreckter Leitung auf.

Hierbei sind, wie in Fig. 13B am Beispiel eines 24 Meter (= viermal 6m in Fig. 13B) langen Trägers 60 dargestellt, die Wicklungsbilder, insbesondere die geformten Bereiche und die nicht geformten Bereiche, des jeweils an gegenüberliegenden Fahrbahnseiten des Trägers 60 angeordneten Langstators 40 vorzugsweise zueinander versetzt angeordnet.

Zur Bereitstellung eines Antriebs mit sechzig Prozent Antriebsleistung folgen beispielsweise aufeinander abwechselnd neun Meter Wicklung und sechs Meter gestreckte Leitung; und zur Bereitstellung eines Antriebs mit 66 Prozent Antriebsleistung folgen beispielsweise aufeinander abwechselnd zwölf Meter Wicklung und sechs Meter gestreckte Leitung.

Die gestreckte Länge für eine Wicklungsperiode des elektrischen Leiters 40 ist vorzugsweise für alle drei Wicklungsstränge LL, ML, UL identisch und beträgt im Falle einer durchgängig gewickelten Leitung beispielsweise 1.212,6 Millimeter. Eine Wicklungsperiode entspricht vorteilhafterweise etwa sechs Statornutteilungen und beträgt beispielsweise 516 Millimeter.

Im Vergleich zur durchgängig gewickelten Leitung zur Bereitstellung einer vollen Antriebsleistung wird bei reduzierter Antriebsleistung Material des elektrischen Leiters 40 eingespart.

So beträgt beispielsweise bei halbierter Antriebsleistung die gestreckte Länge der Wicklung bei einem Meter Fahrweglänge zweimal Periode, also 2,4 Meter Leitung. Die Materialeinsparung bei der gestreckten Leitung beträgt also etwa sechzig Prozent, nämlich 1 zu 2,4.

Der Wicklungsfaktor, das heißt das Verhältnis der gestreckten Länge des elektrischen Leiters 40 für eine Wicklungsperiode zur Fahrweglänge beträgt bei reduzierter Antriebsleistung also etwa 2,4.

Die längenbezogene Masse der Wanderfeldleitung eines durchgehend gewickelten elektrischen Leiters 40 beträgt beispielsweise 1,84 Kilogramm pro Meter. Abweichungen in der Form und/oder in der Lage sind bis zu einer Größe zulässig, bei der
- die Freiraumbegrenzung F (vgl. Fig. 5D) nicht überschritten wird sowie
- die korrekte geometrische Konstellation der Wicklungsstränge untereinander gegeben ist.

Erdungsmanschetten und Erdungsleitungen sind aus Gründen der Übersichtlichkeit nicht graphisch dargestellt.

Kurz gesagt ist in Fig. 1 bis Fig. 13B die flexible Ausrüstung der Langstatorwicklung eines Magnetbahnsystems in hoher Qualität dargestellt.

### Bezugszeichenliste

- 10: Kontrollsystem, insbesondere I[ntegriertes]M[anagement]S[ystem]
- 40: elektrischer Leiter, insbesondere Wanderfeldleiter, zum Beispiel Wicklungsstrang, im Speziellen L[ang]S[tator]W[icklungs]-Kabel oder Langstator
- 42: Anschluss des elektrischen Leiters 40 am Träger 60
- 44: Verschaltungsmittel, insbesondere Verbindungs- oder Verkettungs- element, zum Beispiel Fahrwegträger oder Fahrbahnträger, etwa Stahl-, Beton- oder Muffe, des elektrischen Leiters 40
- 50: Vorrat, insbesondere Trommel, zum Beispiel Kabeltrommel
- 60: Träger, insbesondere Stator eines Linearmotors, zum Beispiel Fahrwegträger oder Fahrbahnträger, wie etwa Stahlträger, Beton- träger oder Hybridträger, einer Magnetschwebebahn
- 601: in Trassierungsrichtung gesehen linke Seite des Trägers 60
- 60r: in Trassierungsrichtung gesehen rechte Seite des Trägers 60
- 62: Längsachse des Trägers 60
- 64: Fahrweg, insbesondere Plattenfahrweg des Trägers 60
- 66: Übergang von zwei Trägereinheiten des Trägers 60, insbesondere Trägerübergang
- 66n: freie Nut oder Dehnspalt am Trägerübergang 66 beim Stand der Technik (vgl. Fig. 5A und Fig. 5B)
- 68: Wange des Trägers 60
- 70: Statorpaket des Trägers 60
- 72: Nut des Trägers 60, insbesondere Nut des Statorpakets 70
- 100: Verarbeitungseinrichtung, insbesondere Biege- und Kröpfeinrich- tung
- 110: Rad der Verarbeitungseinrichtung 100
- 120: der Verarbeitungseinrichtung 100 zugeordneter Fahrweg, insbe- sondere den Rädern der Verarbeitungseinrichtung 100 zugeordnete Schiene
- 200: Aufnahmeeinrichtung, insbesondere Fördereinrichtung, zum Bei- spiel Förderband
- 300: Ausrüstungseinrichtung, insbesondere Verlegeeinheit, beispiels- weise Eindruckeinrichtung
- 400: Vorrichtung, insbesondere Montagevorrichtung (= erstes Ausführungsbeispiel; vgl. Fig. 1 und Fig. 2)
- 400': Vorrichtung, insbesondere Montagevorrichtung (= zweites Ausführungsbeispiel; vgl. Fig. 3)
- A: erster, dem elektrischen Leiter 40 zugeordneter Wicklungstyp
- B: zweiter, dem elektrischen Leiter 40 zugeordneter Wicklungstyp
- F: Freiraumbegrenzung
- L: Bewegungsrichtung der Aufnahmeeinrichtung 200
- LL: erste Phase, insbesondere unterer Wicklungsstrang des elektri- schen Leiters 40, beispielsweise untere Lage (lower layer) der L[ang]S[tator]W[icktung]s
- ML: zweite Phase, insbesondere mittlerer Wicklungsstrang des elektri- schen Leiters 40, beispielsweise mittlere Lage (middle layer) der L[ang]S[tator]W[icklung]
- Q: Bewegungsrichtung der Verarbeitungseinrichtung 100
- T: Trassierungsrichtung des Trägers 60, insbesondere Richtung der Fertigstellung des Fahrwegträgers 60
- UL: dritte Phase, insbesondere oberer Wicklungsstrang des elektri- schen Leiters 40, beispielsweise obere Lage (upper layer) der L[ang]S[tator]W[icklung]

## Patentansprüche

1. Montagevorrichtung *(400; 400'), aufweisend*
- mindestens eine Verarbeitungseinrichtung (100), insbesondere Biege- und Kröpfeinrichtung, zum Verarbeiten mindestens eines für mindestens einen Linearmotor vorgesehenen, mindestens eine elektrische Leitung aufweisenden elektrischen Leiters (40), insbesondere mindestens eines Wanderfeldleiters, zum Beispiel mindestens eines Wicklungsstrangs, wobei der elektrische Leiter (40) mittels der Verarbeitungseinrichtung (100)
-- geregelt, insbesondere aus mindestens einem Vorrat (50), zum Beispiel von mindestens einer Trommel, zur Verfügung stellbar ist und
-- kontrolliert formbar, insbesondere als mindestens eine Langstatorwicklung (LSW) ausrichtbar und/oder biegbar und/oder kröpfbar und/oder wickelbar, ist,
- mindestens eine Aufnahmeeinrichtung (200) zum Aufnehmen, insbesondere Fördereinrichtung zum Befördern, des von der Verarbeitungseinrichtung (100) zur Verfügung gestellten und geformten elektrischen Leiters (40) und
- mindestens eine Ausrüstungseinrichtung (300), insbesondere Verlegeeinheit, beispielsweise Eindruckeinrichtung,
-- zum Ausrüsten mindestens eines Trägers (60), insbesondere mindestens eines Stators des Linearmotors, zum Beispiel mindestens eines im Wesentlichen aus Stahl und/oder aus Beton gebildeten Fahrbahnträgers einer Magnetschwebebahn, mit dem
-- von der Verarbeitungseinrichtung (100) zur Verfügung gestellten und geformten und
-- von der Aufnahmeeinrichtung (200) aufgenommenen elektrischen Leiter (40) und
-- zum Verschalten, insbesondere zum Verbinden oder zum Verketten, beispielsweise zum Vermuffen, der jeweiligen Phasen (LL, ML, UL) der Abschnitte des elektrischen Leiters (40), wobei *für einen auf physikalischer Durchtrennung der drei Phasen (LL, ML, UL) basierenden planmäßigen beliebigen Lagentausch der Phasen (LL, ML, UL)* mindestens zwei der jeweiligen Phasen (LL, ML, UL) der Abschnitte des elektrischen Leiters (40) alternierend oder vertauscht, insbesondere über Kreuz, verschaltbar sind, so dass der zusammengesetzte elektrische Leiter (40) die drei Phasen (LL, ML, UL) zu gleichen Anteilen aufweist, insbesondere
- zu etwa einem Drittel in Form der ersten Phase (LL),
- zu etwa einem Drittel in Form der zweiten Phase (ML) und
- zu etwa einem Drittel in Form der dritten Phase (UL)
gewickelt ist,
wobei *zum Verarbeiten des elektrischen Leiters (40), insbesondere zum Ausrüsten des Trägers (60) mit dem elektrischen Leiter (40),* zumindest Teile (100, 200, 300) der Montagevorrichtung (400; 400') in mindestens einem geschlossenen oder zumindest überdachten Gebäude, insbesondere in mindestens einer Halle, zum Beispiel in mindestens einer Trägerausrüstungshalle, untergebracht sind.

2. *Montagevorrichtung* gemäß Anspruch 1, ***dadurch* gekennzeichnet, *dass*** *die Verarbeitungseinrichtung (100)* mindestens ein, insbesondere computergestütztes, Kontrollsystem (10) zum Erfassen und/oder zum Ermitteln von für das Verarbeiten des elektrischen Leiters (40) relevanten Daten und/oder Informationen *aufweist,* wobei das Zur-Verfügung-Stellen des elektrischen Leiters (40) und das Formen des elektrischen Leiters (40) in Abhängigkeit von den erfassten und/oder ermittelten Daten und/oder Informationen steuerbar ist.

3. *Montagevorrichtung* gemäß Anspruch 1 oder 2, **dadurch gekennzeichnet, dass** die Verarbeitungseinrichtung (100) zum dreiphasigen Wickeln des elektrischen Leiters (40) ausgelegt ist, insbesondere zum Wickeln
- mindestens einer ersten Phase (LL),
- mindestens einer zweiten Phase (ML) und
- mindestens einer dritten Phase (UL)
beispielsweise einer L[ang]S[tator]W[icklung].

4. *Montagevorrichtung* gemäß mindestens einem der Ansprüche 1 bis 3, **dadurch gekennzeichnet, dass** die Verarbeitungseinrichtung (100) zum bereichsweisen Formen des elektrischen Leiters (40) ausgelegt ist, insbesondere dass zum Bereitstellen einer verminderten Antriebsleistung des Linearmotors der elektrische Leiter (40) bereichsweise, insbesondere *beispielsweise* auf entsprechend anteiliger Länge, ungeformt, *wie etwa* ungewickelt, zur Verfügung stellbar ist.

5. *Montagevorrichtung* gemäß mindestens einem der Ansprüche 1 bis 4, **dadurch gekennzeichnet, dass** der geformte elektrische Leiter (40) abschnittsweise unterteilbar, insbesondere in Abschnitten vorgegebener Länge vom Vorrat (50) abtrennbar, beispielsweise abschneidbar, ist

6. *Montagevorrichtung* gemäß mindestens einem der Ansprüche 1 bis 5, **dadurch gekennzeichnet,**
- **dass** die Verarbeitungseinrichtung (100) quer (Q), insbesondere im Wesentlichen senkrecht, zur Längsachse (62) des auszurüstenden Trägers (60) und/oder
- **dass** die Aufnahmeeinrichtung (200) im Wesentlichen entlang (L) der Richtung der Längsachse (62) des auszurüstenden Trägers (60)
verfahrbar ist.

7. Montagevorrichtung gemäß mindestens einem der Ansprüche 1 bis 6, **dadurch gekennzeichnet, dass** der Träger (60) mittels mindestens zweier Verarbeitungseinrichtungen (100) ausrüstbar ist, wobei
- mindestens eine der Verarbeitungseinrichtungen (100) zum Formen des elektrischen Leiters (40) gemäß mindestens einem ersten Formungstyp, insbesondere gemäß mindestens einem ersten Wicklungstyp, und
- mindestens eine weitere der Verarbeitungseinrichtungen (100) zum Formen des elektrischen Leiters (40) gemäß mindestens einem zweiten Formungstyp, insbesondere gemäß mindestens einem zweiten Wicklungstyp,
ausgebildet ist.

8. Verfahren zum Verarbeiten mindestens eines für mindestens einen Linearmotor vorgesehenen, mindestens eine elektrische Leitung aufweisenden elektrischen Leiters (40), insbesondere mindestens eines Wanderfeldleiters, zum Beispiel mindestens eines Wicklungsstrangs,
- wobei der elektrische Leiter (40)
-- geregelt, insbesondere aus mindestens einem Vorrat (50), zum Beispiel von mindestens einer Trommel, durch eine Verarbeitungseinrichtung (100) zur Verfügung gestellt wird und
-- kontrolliert geformt, insbesondere als mindestens eine Langstatorwicklung (LSW) ausgerichtet und/oder gebogen und/oder gekröpft und/oder gewickelt, wird, wobei der geformte elektrische Leiter (40) von der Verarbeitungseinrichtung (100) durch eine Aufnahmeeinrichtung (200) aufgenommen wird,
- wobei der geformte elektrische Leiter (40) an und/oder in mindestens einen Träger (60), insbesondere an und/oder in mindestens einen Stator des Linearmotors, zum Beispiel an und/oder in mindestens einen im Wesentlichen aus Stahl und/oder aus Beton gebildeten Fahrbahnträger einer Magnetschwebebahn, angebracht, insbesondere montiert, wird und
- wobei *für einen auf physikalischer Durchtrennung der drei Phasen (LL, ML, UL) basierenden planmäßigen beliebigen Lagentausch der Phasen (LL, ML, UL)* mindestens zwei der jeweiligen Phasen (LL, ML, UL) der Abschnitte des elektrischen Leiters (40) durch eine Ausrüstungseinrichtung (300) alternierend oder vertauscht, insbesondere über Kreuz, verschaltet, insbesondere verbunden oder verkettet, beispielsweise vermufft, werden, so dass der zusammengesetzte elektrische Leiter (40) die drei Phasen (LL, ML, UL) zu gleichen Anteilen aufweist, insbesondere
- zu etwa einem Drittel in Form der ersten Phase (LL),
- zu etwa einem Drittel in Form der zweiten Phase (ML) und
- zu etwa einem Drittel in Form der dritten Phase (UL)
gewickelt wird,
wobei *zum Verarbeiten des elektrischen Leiters (40), insbesondere zum Ausrüsten des Trägers (60) mit dem elektrischen Leiter (40),* zumindest Teile (100, 200, 300) der Montagevorrichtung (400; 400') in mindestens einem geschlossenen oder zumindest überdachten Gebäude, insbesondere in mindestens einer Halle, zum Beispiel in mindestens einer Trägerausrüstungshalle, untergebracht sind.

9. Verfahren gemäß Anspruch 8, **dadurch gekennzeichnet, dass** der elektrische Leiter (40) zumindest bereichsweise dreiphasig, insbesondere zu
- mindestens einer ersten Phase (LL),
- mindestens einer zweiten Phase (ML) und
- mindestens einer dritten Phase (UL)
beispielsweise einer L[ang]S[tator]W[icklung],
gewickelt wird.

10. Verfahren gemäß Anspruch 8 oder 9, **dadurch gekennzeichnet, dass** zum Bereitstellen einer verminderten Antriebsleistung des Linearmotors der elektrische Leiter (40) bereichsweise nicht geformt, insbesondere auf entsprechend anteiliger Länge ungewickelt zur Verfügung gestellt, wird.

11. Verfahren gemäß Anspruch 10, **dadurch gekennzeichnet, dass** der elektrische Leiter (40), insbesondere nach Abschluss des Formungsprozesses,
- abschnittsweise unterteilt, insbesondere in Abschnitten vorgegebener Länge vom Vorrat (50) abgetrennt, beispielsweise abgeschnitten, wird und/oder
- aufgenommen, insbesondere zur gewünschten Montagestelle befördert, wird.

12. Verwendung mindestens einer *Montagevorrichtung* (400; 400') gemäß mindestens einem der Ansprüche 1 bis 7 und/oder eines Verfahrens gemäß mindestens einem der Ansprüche 8 bis 11 zur Herstellung und/oder Verlegung mindestens eines elektrischen Leiters (40) mindestens eines Linearmotors, zum Beispiel zur Herstellung und/oder zur Montage mindestens eines, insbesondere einphasigen und/oder dreiphasigen, Wicklungsstrangs, an und/oder in mindestens einem/n im Wesentlichen aus Stahl und/oder Beton aus gebildeten Fahrbahnträger einer Magnetschwebebahn.

## Claims

1. Mounting device (400; 400'), having
- at least one processing device (100), in particular, a bending or elbowing device, for processing at least one electrical conductor (40) provided for at least one linear motor and having at least one electrical line (40), in particular a travelling magnetic field conductor, for example, of at least a winding strand, whereby the electrical conductor (40) by means of the processing device (100)
-- is regulated, in particular is provided from at least one supply (50), for example from at least one drum, and
-- is controllably shapeable, in particular is into at least one long stator winding (LSW) and/or is bendable and/or able to be bent at right angles and/or windable,
- at least one receiving device (200) for receiving, in particular a conveyor for feeding, the conductors (40) provided and shaped by the processing device (100) and
- at least one finishing device (300), in particular a track-laying unit, for example a stamping device,
-- for fitting at least one support (60), in particular of at least one stator of the linear motor, for example at least one trackway support made essentially from steel and/or concrete of a magnetic levitation system, with the
-- electrical conductor (40) provided by and shaped by the processing device (100) and received by the receiving device (200) and
-- for connecting up, in particular for connecting or for interconnecting, for example for coupling, of the respective phases (LL, ML, UL) of the sections of the electrical conductor (40), whereby for an arbitrary position exchange based on a scheduled physical separation of the three phases (LL, ML, UL), at least two of the respective phases (LL, ML, UL) of the sections of the electrical conductor (40) are alternated or exchanged, in particular are connectable via a cross joint, so that the composite conductor (40) has the three phases (LL, ML, UL) in the same parts, in particular is wound
- at approximately a third in the form of the first phase (LL),
- at approximately a third in the form of the second phase (ML) and
- at approximately a third in the form of the third phase (UL),
whereby for processing of the electric conductor (40), in particular for fitting the support (60) with the electrical conductor (40), at least parts (100, 200, 300) of the mounting device (400, 400') are installed in at least one closed or at least roofed building, in particular in at least one hall, for example in at least one support-fitting hall.

2. Mounting device according to claim 1, **characterized in that** the processing device (100) has at least one, in particular computer-supported, control system (10) for detecting and/or for determining relevant data and/or information of the electrical conductor (40) to be processed, whereby the providing of the electrical conductor (40) and the shaping of the electrical conductor (40) is controllable as a function of the detected and/or determined data and/or information.

3. Mounting device according to claim 1 or 2, **characterized in that** the processing device (100)is designed for three-phase coiling of the electrical conductor (40), in particular for winding
- at least one first phase (LL),
- at least one second phase (ML) and
- at least one third phase (UL),
for example a long stator winding (LSW).

4. Mounting device according to at least one of claims 1 through 3, **characterized in that** the processing device (10) is designed for area-by-area shaping of the electrical conductor (40), in particular for providing a reduced drive power of the linear motor the electrical conductor (40), is provided unformed area-by-area, for example from corresponding proportionate lengths, as approximately unwound.

5. Mounting device according to one of claims 1 through 4, **characterized in that** the shaped electrical conductor (40) is divisible into sections, in particular, is separable into sections of predetermined lengths of supplies (50), in particular, is cuttable into sections.

6. Mounting device according to one of claims 1 through 5, **characterized in that**
- the processing device (100) is drivable transversely (Q), in particular substantially perpendicular, to the longitudinal axis (62) of the support (60) to be fitted and/or
- the receiving device (200) is drivable substantially along (L) the direction of the longitudinal axis (62) of the support (60) to be fitted.

7. Mounting device according to one of claims 1 through 6, **characterized in that** the support (60) is fittable by means of at least two processing devices (100), whereby
- at least one of the processing devices (100) is embodied for forming the electrical conductor (40) according to at least one first shaping type, in particular according to at least one first winding type, and
- at least one further of the processing devices (100) is embodied for forming the electrical conductor (40) according to at least one second shaping type, in particular according to at least one second winding type.

8. Method for processing at least one electrical conductor (40) having at least one electrical line provided for at least one linear motor, in particular, at least one travelling magnetic field conductor, for example at least one winding strand,
- whereby the electrical conductor (40) is
-- regulated, in particular is provided from at least one supply (50), for example from at least one drum, and by means of a process device (100) is provided and
-- controllably shaped, in particular into at least one long stator winding (LSW) and/or is bent and/or formed at right angles and/or wound, whereby the shaped electrical conductor (40) is received by the processing device (100) by a receiving device (200),
- whereby the shaped electrical conductor (40) is fitted, in particular mounted onto and/or in at least one support (60), in particular onto and/or in at least one stator of the linear motor, for example onto and/or in at least one trackway support of a magnetic levitation system, and
- whereby for an arbitrary position exchange based on a scheduled physical separation of the three phase (LL, ML, UL), at least two of the respective phases (LL, ML, UL) of the sections of the electrical conductor (40) are alternated or exchanged by a fitting device (300), in particular are connectable via a cross joint, so that the composite conductor (40) has the three phases (LL, ML, UL) in the same parts, in particular is wound
- at approximately a third in the form of the first phase (LL),
- at approximately a third in the form of the second phase (ML) and
- at approximately a third in the form of the third phase (UL),
whereby for processing of the electric conductor (40), in particular for fitting the support (60) with the electrical conductor (40), at least parts (100, 200, 300) of the mounting device (400, 400') are installed in at least one closed or at least roofed building, in particular in at least one hall, for example in at least one support-fitting hall.

9. Method according to claim 8, **characterized in that** the electrical conductor (40) is wound at least area by area in three phases, in particular to
- at least a first phase (LL),
- at least a second phase (ML) and
- at least a third phase (UL)
for example a L[ong]S[tator]W[inding].

10. Method according to claim 8 or 9, **characterized in that** for providing a reduced drive output of the linear motor the electrical conductor (40) is not shaped area by area, in particular is provided in unwound, proportionate lengths.

11. Method according to claim 10, **characterized in that** the electrical conductor (40), in particular, after completion of the shaping process,
- is divided into sections, in particular is separated in sections of predetermined lengths from the inventory (50), for example, is cut, and/or
- is taken up, in particular is conveyed to desired installation sites.

12. Use of at lest mounting device (400; 400') according to at least one of claims 1 through 7 and/or a method according to at least one of claims 8 through 11 for making and/or placing at least one electrical conductor (40) of at least one linear motor, for example, for making and/or for mounting at least one, in particular one-phase and/or three-phase, winding strands, and/or in at least one trackway support of a magnetic levitation system made substantially from steel and/or concrete.

## Revendications

1. Dispositif de montage (400;400'), présentant :
- au moins un dispositif de traitement (100), notamment un dispositif de cintrage et de coudage, pour traiter au moins un conducteur électrique (40) présentant au moins une ligne électrique, prévu pour au moins un moteur linéaire, notamment au moins un conducteur à onde progressive, par exemple au moins un enroulement de phase, dans lequel le conducteur électrique (40) au moyen du dispositif de traitement (100)
-- est réglé, notamment peut être mis à disposition depuis au moins un dispositif de stockage (50), par exemple depuis au moins un tambour, et
-- peut être façonné de manière contrôlée, notamment peut être aligné comme au moins un enroulement de stator longitudinal et/ou peut être cintré et/ou peut être coudé et/ou peut être enroulé,
- au moins un dispositif de réceptacle (200) pour recevoir, notamment un dispositif de transport pour transporter, le conducteur électrique (40) façonné mis à disposition par le dispositif de traitement (100) et
- au moins un dispositif d'équipement (300), notamment une unité de pose, par exemple un dispositif d'enfoncement,
-- pour équiper au moins un support (60), notamment d'au moins un stator du moteur linéaire, par exemple au moins d'une poutre sous chaussée d'un train à suspension magnétique fabriquée essentiellement en acier et/ou en béton, avec le
--- conducteur électrique (40) mis à disposition et/ou façonné par le dispositif de traitement (100) et
-- renfermé par le dispositif de réceptacle (200) et
-- pour connecter, notamment pour relier ou pour enchaîner, par exemple pour relier par gaine les phases respectives (LL, ML, UL) des portions du conducteur électrique (40), dans lequel en vue de n'importe quelle permutation des phases (LL, ML, UL) planifiée se basant sur un sectionnement physique des trois phases (LL, ML, UL), au moins deux des phases respectives (LL, ML, UL) des portions du conducteur électrique (40) peuvent être connectées en alternance ou interverties, notamment en quinconce, de sorte que le conducteur électrique (40) composé présente les trois phases (LL, ML, UL) sur les mêmes portions, notamment
- sur environ un tiers la première phase (LL),
- sur environ un tiers la deuxième phase (ML) et
- sur environ un tiers la troisième phase (UL) est enroulée,
dans lequel à des fins de traitement du conducteur électrique (40), notamment pour équiper le support (60) avec le conducteur électrique (40), au moins des pièces (100,200,300) du dispositif de montage (400 ;400') sont renfermées dans au moins un bâtiment fermé ou au moins couvert, notamment dans au moins un hangar, par exemple dans au moins un hangar d'équipement du support.

2. Dispositif de montage selon la revendication 1, **caractérisé en ce que** le dispositif de traitement (100) présente au moins un système de contrôle (10), notamment protégé informatiquement pour détecter et/ou déterminer les données et/ou informations significatives en vue du traitement du conducteur électrique (40), dans lequel la mise à disposition du conducteur électrique (40) et le façonnage du conducteur électrique (40) peuvent être commandés en fonction des données et/ou informations détectées et/ou déterminées.

3. Dispositif de montage selon la revendication 1 ou 2, **caractérisé en ce que** le dispositif de traitement (100) est conçu pour l'enroulement triphasé du conducteur électrique (40), notamment pour enrouler
- au moins une première phase (LL),
- au moins une deuxième phase (ML) et
- au moins une troisième phase (UL)
par exemple d'un enroulement de stator longitudinal.

4. Dispositif de montage selon au moins une des revendications 1 à 3, **caractérisé en ce que** le dispositif de traitement (100) est conçu pour le façonnage sur des portions du conducteur électrique (40), notamment **en ce que** pour fournir une puissance d'entraînement diminuée du moteur linéaire le conducteur électrique (40) peut être mis à disposition sous une forme approximativement déroulée, non façonnée sur des sections, par exemple sur une fraction de longueur correspondante.

5. Dispositif de montage selon au moins une des revendications 1 à 4, **caractérisé en ce que** le conducteur électrique (40) façonné peut être divisé en sections, notamment peut être coupé, par exemple tranché en sections d'une longueur prédéterminée depuis le dispositif de stockage (50).

6. Dispositif de montage selon au moins une des revendications 1 à 5, **caractérisé en ce que**
- le dispositif de traitement (100) peut être déplacé transversalement (Q), notamment essentiellement perpendiculairement à l'axe longitudinal (62) du support (60) à équiper, et/ou
- le dispositif de réceptacle (200) peut être déplacé essentiellement le long (L) de la direction de l'axe longitudinal (62) du support à équiper (60).

7. Dispositif de montage selon au moins une des revendications 1 à 6, **caractérisé en ce que** le support (60) peut être équipé au moyen d'au moins deux dispositifs de traitement (100), dans lequel
- au moins un des dispositifs de traitement (100) est réalisé pour le façonnage du conducteur électrique (40) selon au moins un premier type de façonnage, notamment selon au moins un premier type d'enroulement, et
- au moins un autre des dispositifs de traitement (100) est réalisé pour le façonnage du conducteur électrique (40) selon au moins un deuxième type de façonnage, notamment selon au moins un deuxième type d'enroulement.

8. Procédé de traitement d'au moins un conducteur électrique (40) prévu pour au moins un moteur linéaire, présentant au moins une ligne électrique, notamment d'au moins un conducteur à onde progressive, par exemple d'au moins un enroulement de phase,
- dans lequel le conducteur électrique (40)
-- est réglé, notamment peut être mis à disposition par un dispositif de traitement (100) depuis au moins un dispositif de stockage (50), par exemple depuis au moins un tambour, et
-- peut être façonné de manière contrôlée, notamment peut être aligné comme au moins un enroulement de stator longitudinal et/ou peut être cintré et/ou peut être coudé et/ou peut être enroulé, dans lequel le conducteur électrique (40) façonné est renfermé par le dispositif de traitement (100) à l'intérieur d'un dispositif de réceptacle (200),
- dans lequel le conducteur électrique façonné (40) est installé, notamment monté sur et/ou dans au moins un support (60), notamment sur et/ou dans au moins un stator du moteur linéaire, par exemple sur et/ou dans au moins une poutre sous chaussée d'un train à suspension magnétique fabriquée essentiellement en acier et/ou en béton, et
- dans lequel en vue de n'importe quelle permutation des phases (LL, ML, UL) planifiée se basant sur un sectionnement physique des trois phases (LL, ML, Ul), au moins deux des phases respectives (LL, ML, UL) des portions du conducteur électrique (40) peuvent être connectées en alternance ou interverties, notamment en quinconce, par un dispositif d'équipement (300) de sorte que le conducteur électrique (40) composé présente les trois phases (LL, ML, UL) sur les mêmes portions, notamment
- sur environ un tiers la première phase (LL),
- sur environ un tiers la deuxième phase (ML) et
- sur environ un tiers la troisième phase (UL) est enroulée,
dans lequel à des fins de traitement du conducteur électrique (40), notamment pour équiper le support (60) avec le conducteur électrique (40), au moins des pièces (100,200,300) du dispositif de montage (400 ;400') sont renfermées dans au moins un bâtiment fermé ou au moins couvert, notamment dans au moins un hangar, par exemple dans au moins un hangar d'équipement de support.

9. Procédé selon la revendication 8, **caractérisé en ce que** le conducteur électrique est enroulé au moins sur des portions de manière triphasée, notamment sur
- au moins une première phase (LL),
- au moins une deuxième phase (ML) et
- au moins une troisième phase (UL)
par exemple d'un enroulement de stator longitudinal.

10. Procédé selon la revendication 8 ou 9, **caractérisé en ce que** pour fournir une puissance d'entraînement diminuée du moteur linéaire le conducteur électrique (40) peut être mis à disposition sous une forme approximativement déroulée, non façonnée sur des portions, par exemple sur une fraction de longueur correspondante.

11. Procédé selon la revendication 10, **caractérisé en ce que** le conducteur électrique (40), notamment après la fin du processus de façonnage,
- est divisé en sections, notamment découpé en sections d'une longueur prédéterminée depuis le dispositif de stockage (50), par exemple tranché, et/ou
- est renfermé, notamment transporté vers le site de montage souhaité.

12. Utilisation d'au moins un dispositif de montage (400;400') selon au moins une des revendications 1 à 7 et/ou d'un procédé selon au moins une des revendications 8 à 11, pour la fabrication et/ou la pose d'au moins un conducteur électrique (40) d'au moins un moteur linéaire, par exemple pour la fabrication et/ou le montage d'au moins un enroulement de phase monophasé et/ou triphasé, sur et/ou dans au moins une poutre sous chaussée d'un train à suspension magnétique fabriquée essentiellement en acier et/ou en béton
